# EUROPEAN PATENT SPECIFICATION

(11) **EP 1 517 470 B1**
(45) Date of publication and mention of the grant of the patent: **08.07.2009**
(21) Application number: 04020129.5
(22) Date of filing: 25.08.2004
(51) Int. Cl.: H04L 12/14

(54) **Communication terminal, billing apparatus, service providing apparatus, and program**
Kommunikationsendgerät, Vergebührungsvorrichtung, Vorrichtung zum Anbieten von Diensten und zugehöriges Programm
Terminal de communication, dispositif de facturation, appareil et programme de fourniture de services

(30) Priority: 18.09.2003 JP 2003326595
(43) Date of publication of application: 23.03.2005
(73) Proprietor: NTT DoCoMo, Inc., Tokyo 100-6150 (JP)
(72) Inventor: Suzuki, Takashi IPD NTT DoCoMo, Inc., Chiyoda-ku Tokyo 100-6150 (JP); Nakayama, Takehiro IPD NTT DoCoMo, Inc., Chiyoda-ku Tokyo 100-6150 (JP); Takeshita, Atsushi IPD NTT DoCoMo, Inc., Chiyoda-ku Tokyo 100-6150 (JP); Fujimoto, Hiroshi IPD NTT DoCoMo, Inc., Chiyoda-ku Tokyo 100-6150 (JP)
(74) Representative: Henseler, Daniela

(56) References cited:
- US-A1- 2002 128 984
- US-A1- 2003 060 188
- KAILAR R: "Reasoning about accountability in protocols for electronic commerce" SECURITY AND PRIVACY, 1995. PROCEEDINGS., 1995 IEEE SYMPOSIUM ON OAKLAND, CA, USA 8-10 MAY 1995, LOS ALAMITOS, CA, USA,IEEE COMPUT. SOC, 8 May 1995 (1995-05-08), pages 236-250, XP010138214 ISBN: 0-8186-7015-0

## Description

The present invention relates to a communication terminal, and a program all of which are used to execute a billing process associated with provision of services via communications.

A method of utilizing a relay apparatus on a network is conventionally known as a technique to generate billing information on a service provision via communication (for example JP2003-173398A). FIG. 22 shows a sequence of content distribution using a billing information notifying system as described in JP2003-173398A. The billing information notification apparatus 1200 shown in this figure is a relay apparatus that generates billing information. Billing rule information required by the billing information notifying apparatus 1200 to generate billing information is described in a header section of an HTTP response transmitted from a content distributing device 1300 in response to a content request from a mobile telephone 1100 (1002). By relaying the HTTP response, the billing information notifying apparatus 1200 can extract the billing rule information from the header to generate billing information reflecting packet communication charge relating to content and content charge. With the present system, where the relay apparatus on the network generates billing information, the arrival of the packet at the mobile telephone 1100 must be confirmed in order to accurately calculate the packet communication charge and the content charge. An embodiment described in JP2003-173398A assumes HTTP transmissions on the TCP and utilizes a TCP response confirming function to confirm the arrival of the packet.

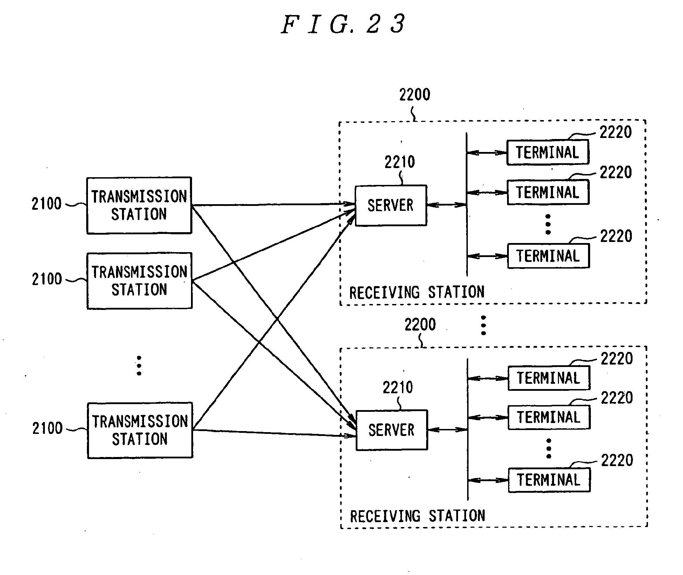

JP10-150653A discloses a pay information providing system which does not use any relay apparatuses on the network and in which a user's receiving station can calculate a charge for pay information and notify the user of the charge. FIG. 23 is a block diagram showing the genera! configuration of the pay information system according to an embodiment described in JP10-150653A. With this system, a receiving station 2200 owned by the user receives charge information on pay information from a transmitting station 2100 together with the pay information. The receiving station can further monitor the usage of the pay information in each terminal 2220 served by the receiving station to calculate a charge for the pay information on the basis of the usage. Further, by retaining usage history in each terminal, the receiving station can flexibly set the charge by, for example, setting a discount rate for the charge based on the number of times the user has used the pay information.

In radio communications such as radio LANs and mobile communications, radio, which is a limited resource, is shared by a large number of users. Accordingly, the communication charge must be carefully set on the basis of the number of communication packets, the time for which a service has been provided, and the like. In order to calculate the communication charge on the basis of the number of communication packets, a system is utilized in which a relay node on the network such as the billing information notifying apparatus 1200 described in JP2003-173398A records the amount of packets used, to calculate the amount billed on the basis of the recorded amount of packets used.

The radio communication involves frequent packet losses resulting from transmission errors. Accordingly, the calculation of the amount billed requires the subtraction of an amount corresponding to the packet losses. This requires a function to confirm that packets have arrived at the user's terminal. The system described in JP2003-173398A assumes web accesses using the HTTP/TCP and is premised on a TCP response confirming function. However, in recent years, there have been an increasing number of services such as multimedia streaming and broadcasting distributions which utilize the UDP, which has no response confirming functions and which unilaterally transmits packets. It is thus difficult to accurately calculate the communication charge using a system that utilizes a relay node.

Further, billing rules on a billed entity, a communication unit price, and the like are expected to be diversified as access networks such as radio LANs and second and third generation mobile communication networks are diversified. Furthermore, different charge systems may be applied even to the same access network depending on the attributes of the user or his or her terminal or usage history. To deal with this situation, it is contemplated that a content distributing apparatus may detect the access network to which a mobile terminal is connected, and the attributes and usage history of the mobile terminal to dynamically generate billing rule information to communicate the information to the relay node. It is also contemplated that a relay node in which billing rule information corresponding to the attributes and usage history is accumulated may be installed in each access network. However, the former method increases loads in connection with the generation of billing rules and is not suitable for high-load services to which a large number of accesses are made. The latter method is not practical because the number of relay nodes increases in proportion to the number of access networks with different charge systems and because the number of billing rules to be managed also increases in proportion to the number of users or terminal attributes.

Moreover, an access network and content distributions may be provided by different providers. In this case, the billing amount must be calculated taking into account billing rules generated by each of the providers. However, the system in JP2003-173398A calculates the amount billed on the basis of only the billing rules provided by the content distribution server and thus cannot reflect the billing rules of the access network provider.

On the other hand, the pay information providing system described in JP10-150653A enables the user's receiving station to calculate a charge for pay information without using any relay nodes. However, a pay information transmitting station generates billing rules on both information charge and network charge. Accordingly, this system does not solve the problem with JP2003-173398A, described above, that is, the need to generate billing rules the number of which increases in proportion to the number of networks with different charge systems. Further, if the pay information provider and the network provider are different from each other and set independent billing policies, and neither of them discloses its billing policies, even the pay information providing system described in JP10-150653A cannot execute a billing process corresponding to diversified billing rules.

Known from US 2002/128984 A1 is a communication terminal, and a program according to the preamble of claims 1 and 8, respectively.

In view of the above problems, it is an object of the invention to provide a communication terminal, and a program all of which operate when a service is provided via communication, to enable a billing process to be executed on the basis of diversified billing rules without increasing loads on network facilities.

To accomplish this object, the invention provides a communication terminal according to claim 1.

Thus, at least one piece of billing rule information on the provision of the service is acquired from the at least one external apparatus to generate billing information on provision of services on the basis of the billing rule information and communication history acquired. Consequently, the billing process can be executed on the basis of diversified billing rules associated with the provision of the service. Further, the communication terminal can acquire different pieces of billing rule information from different servers. Therefore, service providers can allow their servers to individually manage information on their own billing rules.

Furthermore, the communication terminal to which the service has been provided executes a billing process. Consequently, processing loads can be dispersed compared to the execution of all billing processes solely by one billing apparatus. Moreover, the communication terminal generates billing information on the basis of the communication history. This enables a billing process to be accurately executed taking packet losses into account.

The billing rule information contains at least either of first billing rule information on a communication charge required to deliver the service information and second billing rule information individually set for the service information.

The billing process can be executed on the basis of the first billing rule inherent in the network and the second billing rule inherent in the service. Thus, even if the service provider is different from the network provider, the billing process can be executed by acquiring the separately managed billing rules. Therefore, the billing process can be executed on the basis of diversified billing rules associated with the provision of the service.

The communication terminal comprises predicted billing information presenting means for presenting billing information associated with use of the service which information is predicted before the service is utilized, on the basis of the billing rule information acquired from the billing rule acquiring means, and consenting means for transmitting a service request message for requesting the service only if a signal is sensed which consents to payment of the billing information presented by the predicted billing information presenting means.

The user can pre-obtain predicted values for service charges. The user can thus select a service to be utilized on the basis of the predicted values for the service charges.

The communication terminal according to one aspect of the invention is characterized in that at least either of the first billing rule information and the second billing rule information is determined in accordance with attributes of a user owning the terminal.

The billing rules can be set in accordance with the type of the network, the type of the service, and the attributes of the user. Therefore, diversified billed entities can be realized.

The communication terminal may further comprise at least digital signature validating means for validating a digital signature applied to data containing the billing rule information, or digital signature applying means for applying a digital signature to billing information generated by the billing information generating means.

The terminal apparatus can carry out authentication, thus improving the security and reliability of billing information. Specifically, the communication terminal can check an authorized source of metadata containing billing rule information source and billing rule information and whether or not the billing rule information has been altered. Accordingly, the communication terminal can safely generate billing information on the basis of the validated billing rule information. Further, the communication terminal applies the digital signature to the generated billing information. Therefore, the billing information can be safely transmitted to other apparatuses without being altered.

The communication terminal may further comprise prepay information storage means for storing prepay information representative of the amount of money prepaid in order to utilize the service, and prepaid billing processing means for paying the amount of money by subtracting the amount of money to be billed which amount is represented by the billing information generated by the billing information generating means, from the amount of money represented by the prepay information stored in the prepay information storage means.

The communication terminal can internally complete a payment process involved in the use of the service. The communication terminal can thus execute the payment process without transmitting the billing information to other apparatuses. Consequently, the user can quickly complete the payment. This is more convenient to the user.

The communication terminal may further comprise presenting means for presenting billing information associated with the use of the service and calculated either during or after the use of the service.

The user can obtain the billing information associated with the use of the service during or after the use. The user can thus manage the amount of payment for the use of the service.

The first billing rule may include a billing rule for each communication network type, the communication history recording means records communication history for each communication network type, and the billing information generating means generates billing information for each communication network type.

The billing rules can be set for each of the communication networks types with different charge systems. Further, the communication history can be recorded for each communication network type to generate billing information. Therefore, the billing process can be flexibly executed in accordance with the communication network type.

The communication terminal may further comprise billing-rule-to-be-transferred generating means for generating billing rule information to be transferred on a service corresponding to the billing rule information acquired from the billing rule acquiring means, and metadata transferring means for transferring billing rule information to be transferred generated by the billing-rule-to-be-transferred generating means and service description information describing information on the service.

The communication terminal can communicate the information on the service to users owning other communication terminals by generating billing rule information to be transferred on the provided service and transferring the billing rule information and the service description information to the other communication terminals. Accordingly, the diffusion of the service can be facilitated. The billing rules to be transferred may be the same as the billing rules acquired or may be billing rules originally customized by the user transferring the billing rule information. Therefore, diversified billed entities can be realized.

A billing apparatus is described (not forming part of the invention as such) which generates billing rules for the communication charge for each user. This enables the communication charge price to be flexibly set. Further, since the generated billing rules are transferred to each communication terminal, the communication terminal can execute a billing process. Accordingly, loads can be dispersed compared to the collective execution of all the billing processes one billing apparatus.

The billing apparatus further comprises metadata checking means for validating metadata received from an external apparatus and including service description information describing information on the service and second billing rule information individually set for the service.

The billing apparatus validates the service description information and the second billing rule information set for each service issued by the external apparatus. Therefore, a securer and more reliable billing service can be provided to the user.

The billing apparatus further comprises metadata information adding means for adding at least either of new billing rule information and new service description information to the metadata.

The billing apparatus can add new service content or billing rules to the original services and billing rules or customize the original services and billing rules by adding new billing rule information or service description information to the metadata. Therefore, more flexible and more diversified billing services can be provided.

In the billing apparatus, the metadata may be provided with a digital signature of a generator of the metadata, the billing apparatus further comprises digital signature validating means for validating the digital signature, and the metadata checking means validates the metadata if the digital signature validating means validates the digital signature.

The billing apparatus validates the service description information and the second billing rule information set for each service after validating the digital signature to confirm the source of the metadata and that the metadata has not been altered. Therefore, a securer and more reliable billing service can be provided.

The billing apparatus may further comprise bill generating means for generating bill information required to charge a billed target represented by billed target information with the amount of money represented by the amount billed information on the basis of the billed target information and amount billed information contained in the billing information received from the communication terminal, and bill transmitting means for transmitting the bill information generated by the bill generating means to a terminal apparatus identified by the billed target information.

The billing apparatus can extract the amount billed information for each billed target from the billing information generated by communication terminal. The billing apparatus can then issue a bill charging the amount billed to the terminal apparatus of each billed target identified by the billed target information contained in the billing information. Therefore, the charging process can be simplified.

The communication terminal may be used to validate metadata by receiving the metadata from a service providing apparatus and validating the digital signature applied to the metadata. The service providing apparatus can thus provide securer services.

The service providing apparatus (not forming part of the invention as such) may further comprise validation requesting means for transmitting a request for validation of the metadata to the external apparatus in order to validate the metadata before the metadata is distributed to the communication terminal.

The service providing apparatus can be used to provide the communication terminal with the validated metadata by transmitting the request for validation of the metadata to the external apparatus. As a result, the user puts more confidence in services.

The present invention provides a program according to claim 8.

By executing the program, the computer can generate billing information on the provision of the service on the basis of the at least one piece of billing rule information and the communication history. Therefore, the billing process can be executed on the basis of diversified billing rules associated with the provision of the service.

The communication terminal acquires at least one piece of billing rule information on provision of a service from at least one external apparatus to generate billing information on the provision of the service on the basis of the billing rule and communication history acquired. Consequently, a billing process can be executed on the basis of diversified billing rules inherent in a communication network, inherent in the service, or diversified billing rules corresponding to the attributes of a user. Further, the communication terminal can acquire different pieces of billing rule information from different servers. Consequently, service providers can allow their servers to individually manage their own billing rule information.

Furthermore, the communication terminal to which the service has been provided executes a billing process. Accordingly, processing loads can be dispersed compared to the execution of a billing process solely by one billing apparatus. Moreover, the communication terminal generates billing information on the basis of the communication history. Therefore, the billing process can be accurately executed taking packet losses into account.

Further embodiments of the invention may be gathered from the following description and the claims.

The invention will now be explained in more detail in connection with the embodiments shown in the attached drawings.

FIG. 1 is a block diagram showing the whole configuration of a pay information providing system according to a first embodiment of the invention.

FIG. 2 is a chart showing the data organization of first billing rule information according to the embodiment.

FIG. 3 is a diagram showing the organization of data described in metadata according to the embodiment.

FIG. 4 is a block diagram showing the configuration of a communication terminal 100 according to the embodiment.

FIG. 5 is a flow chart showing a procedure from reception of metadata to selection of a service which procedure is executed by the communication terminal 100 according to the embodiment.

FIG. 6 is a diagram showing an example of a charge prediction screen presented on a display section of the communication terminal 100 according to the embodiment.

FIG. 7 is a diagram illustrating how billing information is generated on the basis of first billing rule information, metadata, session information, and communication history information according to the embodiment.

FIG. 8 is a block diagram showing the configuration of a billing server 200 according to the embodiment.

FIG. 9 is a flow chart showing a procedure to authorize metadata executed by the billing server 200 according to the embodiment.

FIG. 10 is a block diagram showing the configuration of a service providing server 300 according to the embodiment.

FIG. 11 is a sequence diagram showing a communication procedure executed by a pay information providing system according to the embodiment.

FIG. 12 is a block diagram showing the whole configuration of a pay information providing system according to a second embodiment of the invention.

FIG. 13 is a block diagram showing the configuration of a billing rule information providing server 400 according to the embodiment.

FIG. 14 is a diagram showing an example of information elements described in billing rules generated by a billing rule information generating section 402 according to the embodiment.

FIG. 15 is a sequence diagram showing a communication procedure executed by the pay information providing system according to the embodiment.

FIG. 16 is a block diagram showing the configuration of a service providing server 500 also operating as a communication terminal according to a third embodiment.

FIG. 17 is a sequence diagram showing a communication procedure executed by a pay information providing system according to the embodiment.

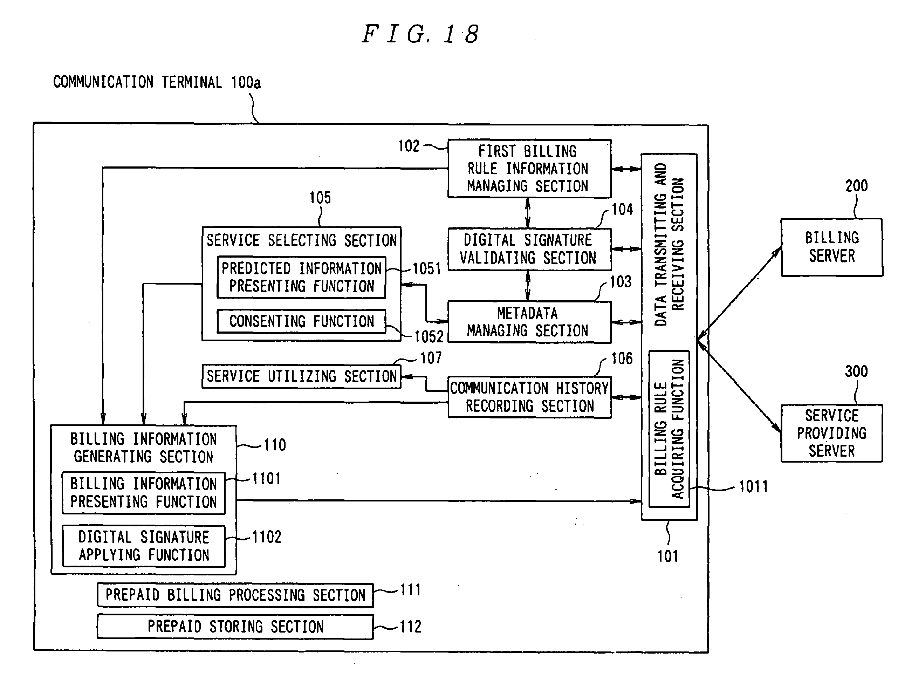

FIG. 18 is a block diagram showing the configuration of a communication terminal 100a according to the third embodiment of the invention.

FIG. 19 is a block diagram showing the configuration of a billing server 200a according to a fourth embodiment of the invention.

FIG. 20 is a flow chart showing a procedure executed by the billing server 200 according to the embodiment to authorize metadata and add new information.

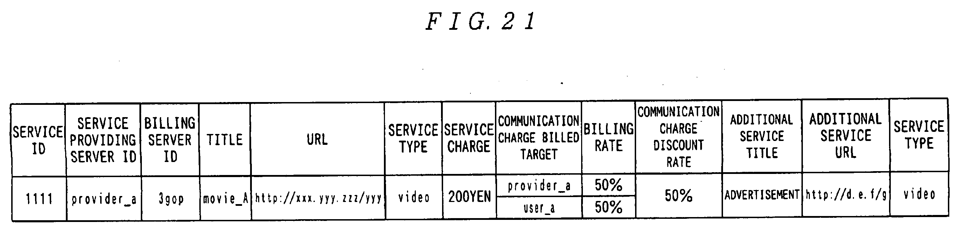

FIG. 21 is a diagram showing metadata to which new information has been added according to the embodiment.

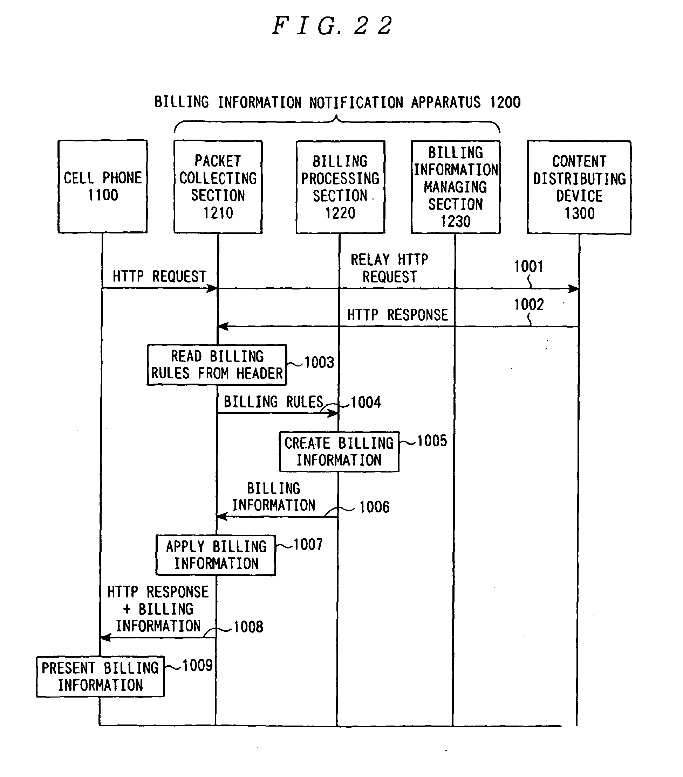

FIG. 22 is a sequence diagram showing a communication procedure executed by a conventional billing information notifying system using a relay node.

FIG. 23 is a block diagram showing the configuration of a conventional pay information providing system.

### (1. Configuration)

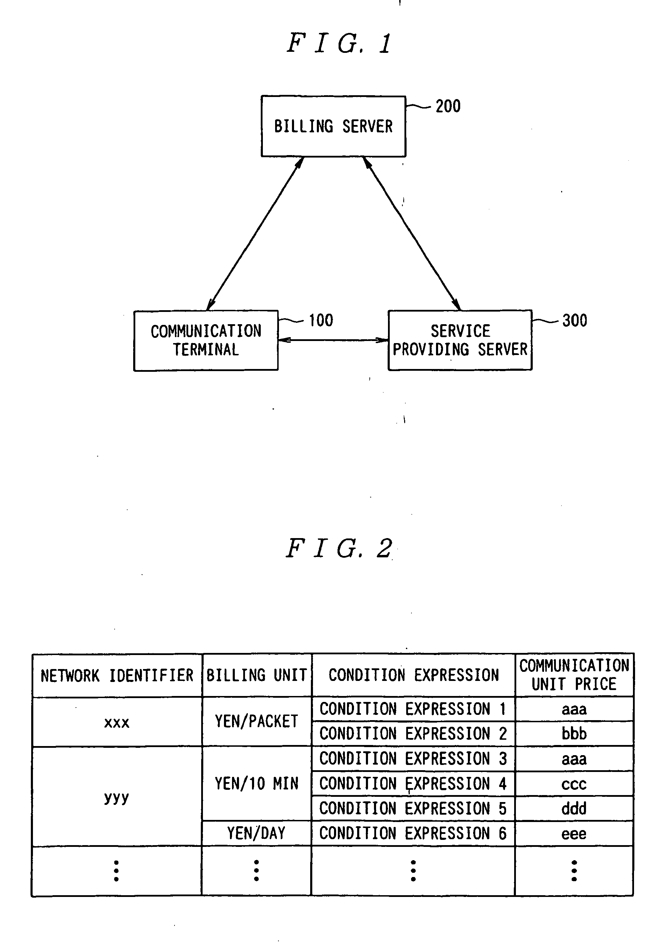

FIG. 1 is a block diagram showing the configuration of a pay service providing system according to a first embodiment. As shown in this figure, the pay service providing system comprises a communication terminal 100, a billing server 200, and a service providing server 300. The communication terminal 100, the billing server 200, and the service providing server 300 are connected together by a wired or wireless network.

The communication terminal 100 is a portable terminal that utilizes, via the communication network, services (video distributions, music distributions, data processing, and the like) provided by the service providing server 300. The communication terminal 100 records the history of usage of the communication network and services. The communication terminal 100 then generates billing information in accordance with the usage history, on the basis of billing rule information on the network and of the services. The communication terminal 100 is not limited to the portable terminal but may be a personal computer or the like which has a communication function.

In response to a request from the communication terminal 100, the billing server 200 issues billing rule information on the usage of the network, authorizes metadata generated by the service providing server 300, processes billing information generated by the communication terminal 100, and calculates a service charge and a network charge. The billing server 200 is owned and operated by a network operator or the like.

The service providing server 300 provides a free or pay service in response to a request from a user. The service providing server 300 transmits billing rule information on the charge for each service and on the network charge required when a service is utilized, to the communication terminal 100; the billing rule information being contained in metadata describing the content of the services.

A detailed description will be given below of the configurations of the communication terminal 100, billing server 200, and service providing server 300.

### (1.1. Communication Terminal)

The communication terminal 100 comprises the hardware configuration of a general portable terminal. That is, the communication terminal 100 comprises a CPU (Central Processing Unit) that controls each section of the terminal 100, a radio communication section that carries out radio communications, an operation section that gives various instructions to the CPU when corresponding keys are operated, a speech processing section with which speeches are made, a speaker that outputs sounds, a display section which displays screens and a storage section including a nonvolatile memory that stores programs and data.

The storage section of the communication terminal 100 stores first billing rule information. The first billing rule is applied to each user and relates to the network charge required when a service is utilized.

FIG. 2 shows the data organization of the first billing rule information. As shown in the figure, as information elements of the first billing rule, communication prices based on billing units and conditions are described for each network type. These information elements are described in a format that can be loaded by the communication terminal 100. For example, the information elements are described utilizing an XML (eXtensible Markup Language).

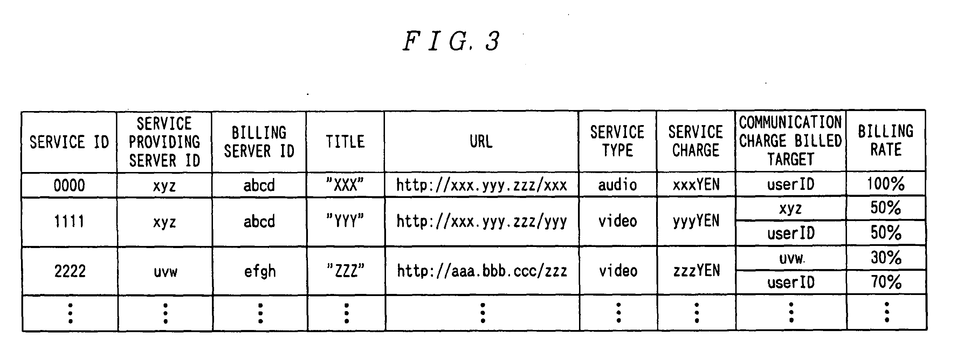

The storage section stores metadata received from the service providing server 300. FIG. 3 shows the data organization of the metadata. As shown in this figure, the metadata contains service description information on the services provided by the service providing server 300 and second billing rule information on billing rules individually set for the services.

The service description information contains "service IDs" that identify the services, a "service providing server ID" that identifies the service providing server 300, which provides the services, a "billing server ID" that identifies the billing server 200, "titles" that identifies the services, a "URL" indicating a location on the network at which service information required to provide the services is accumulated, and "service types" that show the types of the services.

The second billing rule information contains billing rule information on the charge for each service and billing rule information on the network charge required when each service is utilized.

The billing rule information on the charge for each service contains a "service charge" required when each service is utilized. The billing rule information on the network charge required when each service is utilized contains a "communication billed target" that identifies a billed target and a "billing rate" that indicates a burden rate compared to the entire network charge.

Further, the service providing server 300 applies a digital signature to the metadata. Moreover, if the service providing server 300 requests the billing server 200 to authorize the metadata, the billing server 200 also applies a digital signature to the metadata. These information elements of the metadata are described in the XML.

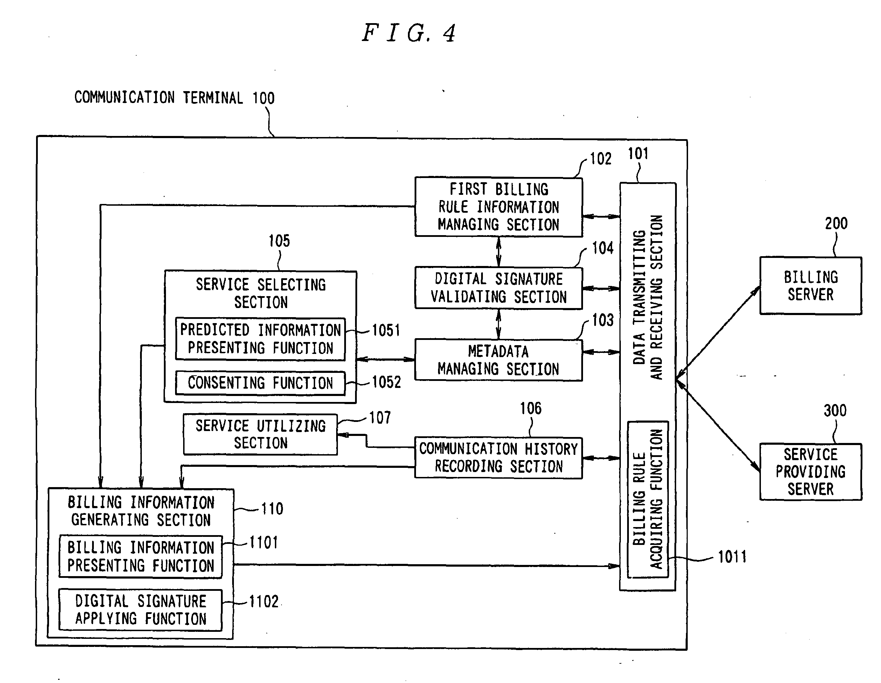

The storage section stores various programs. The programs include a pay service providing program required to utilize a service and to execute a billing process on the service utilized. The pay service providing program is downloaded from a server operating a pay service providing system (not shown) and is stored in the storage section. The CPU of the communication terminal 100 reads these programs and executes them to realize various function sections of the communication terminal 100, shown in FIG. 4.

As shown in the figure, the communication terminal 100 comprises a data transmitting and receiving section 101 that communicates data to and from the billing server 200 and service providing server 300 via the communication network, a first billing rule information managing section 102 that holds first billing rule information issued by the billing server 200, a metadata managing section 103 that holds metadata issued by the service providing server 300, a digital signature validating section 104 that validates the digital signatures applied to the first billing rule information and to the metadata, a service selecting section 105 that requests the service providing server 300 to provide a service selected by the user, a service utilizing section 107 that receives and utilizes service information, communication history recording section 106 that records the communication history of reception of the service information, and a billing information generating section 110 that generates billing information on the basis of the first and second billing rule information and the communication history.

The data transmitting and receiving section 101 comprises a billing rule acquiring function 1011. Upon sensing a signal which has been issued by the user by operating an operation section of the communication terminal 100 and which requests a first billing rule, the data transmitting and receiving section 101 transmits a billing rule information request message containing the user's ID to the billing server 200. In response to the billing rule information request message, the billing rule acquiring function 1011 receives first billing rule information from the billing server 200. The billing rule acquiring function 1011 transfers the first billing rule information to the first billing rule information managing section 102.

Upon sensing a signal requesting metadata, the data transmitting and receiving section 101 transmits a metadata request message for requesting metadata, to the service providing server 300. Upon receiving metadata from the service providing server 300 in response to the metadata request message, the billing rule acquiring function 1011 transfers the metadata to the metadata managing section 103.

The first billing rule information managing section 102 holds the first billing rule information acquired by the billing rule acquiring function 1011. If the first billing rule information acquired by the billing rule acquiring function 1011 contains the digital signature of the billing server 200, the first billing rule information is transmitted to the digital signature validating section 104. Then, the results of the verification returned by the digital signature validating section 104 is managed together with the first billing rule information.

The metadata managing section 103 manages the metadata acquired by the billing rule acquiring function 1011. If the metadata acquired by the billing rule acquiring function 1011 contains a digital signature, the metadata is transmitted to the digital signature validating section 104. Then, the results of the verification returned by the digital signature validating section 104 are managed together with the metadata. If the metadata is successfully validated, the metadata managing section 103 transmits the metadata to the service selecting section 105 in order to allow the service described in the metadata to be provided.

In accordance with a general technique for authentication using a secret key and a public key, the digital signature validating section 104 validates the first billing rule information transmitted by the first billing rule information managing section 102 and the metadata transmitted by the metadata managing section 103. The digital signature validating section 104 returns the results of verification of the first billing rule information to the first billing rule information managing section 102. The digital signature validating section 104 returns the results of verification of the metadata to the metadata managing section 103.

### (Metadata Receiving Process)

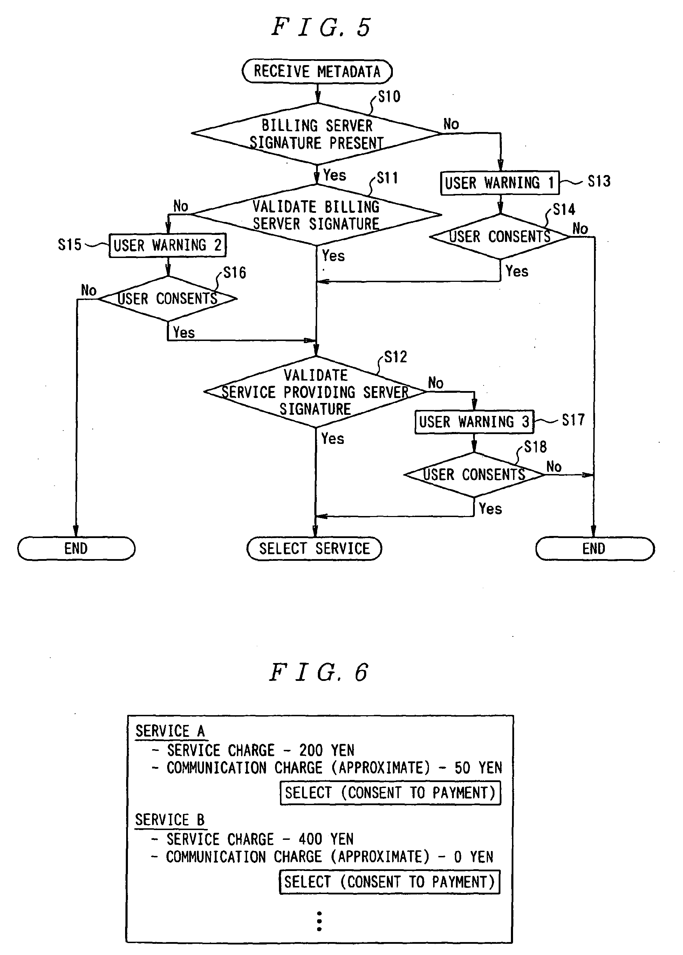

With reference to the flow chart in FIG. 5, description will be given of an operation procedure executed by the communication terminal 100 after receiving metadata by means of service providing server 300 and before selecting a service.

First, upon receiving metadata, the billing rule acquiring function 1011 of the data transmitting and receiving section 101 transfers the metadata to the metadata managing section 103. If a digital signature is applied to the received metadata, the metadata managing section 103 transmits the metadata to the digital signature validating section 104.

If both signatures of the billing server 200 and service providing server 300 are applied to the metadata (S10; Yes and S11; Yes), the digital signature validating section 104 sequentially validates both signatures (S11, S12). If the digital signature validating section 104 successfully validates the signatures (S12; Yes), it returns the results of the verification to the metadata managing section 103. The metadata managing section 103 returns the metadata to the service selecting section 105 in order to proceed to the step of service selection.

On the other hand, if the metadata does not contain the signature (S10; NO) or the signature verification fails (S11; No or S12; No), the procedure described below is executed. If the metadata does not contain the digital signature of the billing server 200 (S10; No), the communication terminal 100 displays a screen warning the user on a display section of the communication terminal 100 (S13). Upon sensing the user's consent (S14; Yes), the procedure proceeds to the verification of the signature of the service providing server 300 (S12). If the communication terminal 100 fails to sense the user's consent (S14; No), it ends the process.

In the step S11, if the digital signature validating section 104 fails to validate the signature of the billing server 200 (S11; No), the communication terminal 100 displays, on the display section, a screen indicating a failure to validate the signature of the billing server 200 (S15). Upon sensing the input of the user's consent (S16; Yes), the communication terminal 100 proceeds to the verification of the signature of the service providing server 300 (S12). If the communication terminal 100 fails to sense the user's consent (S16; No), it ends the process.

In the step S12, if the digital signature validating section 104 fails to validate the signature of the service providing server 300 (S12; No), the communication terminal 100 displays, on the display section, a screen indicating a failure to validate the signature of the service providing server 300 (S17). Upon sensing the input of the user's consent (S18; Yes), the communication terminal 100 proceeds to selection of a service. If the communication terminal 100 fails to sense the user's consent (S18; No), it ends the process.

The service selecting section 105 receives metadata on a service desired by the user, from the metadata managing section 103. The service selecting section 105 extracts from the metadata the location information of the service providing server 300 ("URL" in the example of metadata shown in FIG. 3) and second billing rule information (the "service charge", "billed target", and "billing rate" in the example of metadata shown in FIG. 3). The service selecting section 105 accesses a DNS (Domain Name System) server to acquire information of the communication address (for example, the IP address) of the service providing server 300 from the location information of the service providing server 300. The service selecting section 105 associates the location information with the communication address information acquired to generate session information. The service selecting section 105 transmits a service request message requesting a service to be provided, to the service providing server 300 identified by the communication address information acquired. Further, the service selecting section 105 transmits the session information generated and the second billing rule information to the billing information generating section 110.

The service selecting section 105 comprises a predicted information presenting function 1051 and a consenting function 1052. Before selecting a service, the predicted information presenting function 1051 of the service selecting section 105 presents the user with the amount billed predicted on the basis of the billing rules. Specifically, before transmitting a service request message, the predicted information presenting function 1051 calculates a predicted service and communication charges on the basis of the first billing rule information and the second billing rule information. The predicted information presenting function 1051 generates charge prediction screen for presenting the calculated charges to display the charge prediction screen on the display section of the communication terminal 100. FIG. 6 shows an example of the charge prediction screen displayed on the display section. The consenting function 1052 transmits a service request message to the service providing server 300 only if it senses a signal indicating that "Select (Consent to Payment)" on the charge prediction screen has been selected.

In response to the service request message, the communication history recording section 106 records a communication history including the number of received packets and a communication time when it receives service information from the service providing server 300. The communication history recording section 106 transmits the results of recording of the communication history to the billing information generating section 110.

The service utilizing section 107 utilizes service information received from the service providing server 300. Specifically, if the received service information is a video content or a music content, the service utilizing section 107 reproduces a motion picture or a song. If the received service information is an information provision content or a game content, the service utilizing section 107 transmits and receives data via the communication network and processes data.

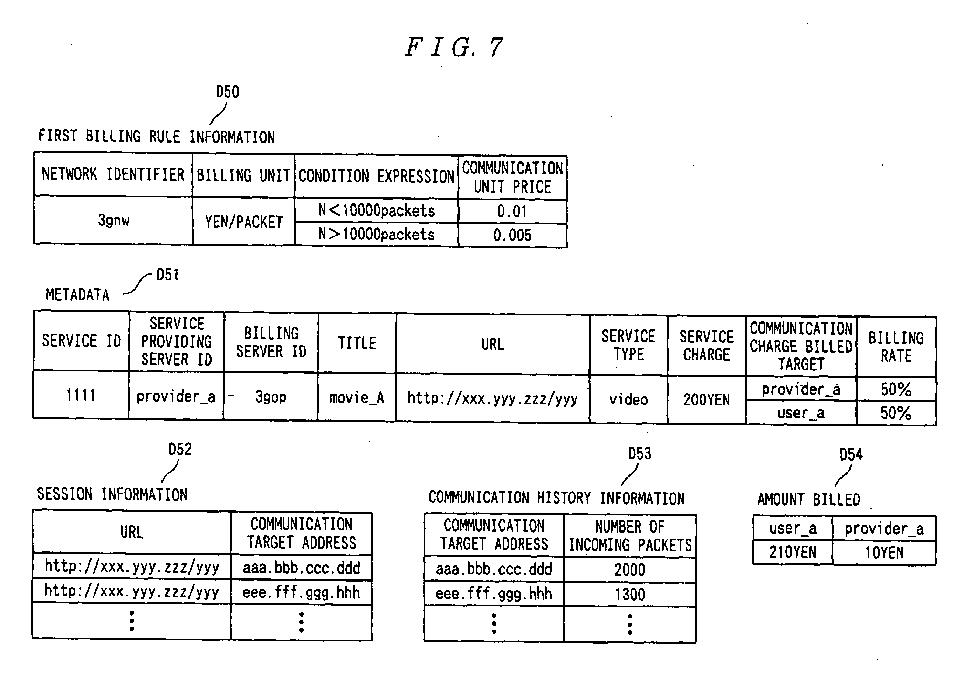

The billing information generating section 110 generates billing information on the services. FIG. 7 shows an example of billing information generated. As shown in the figure, the billing information generating section 110 generates billing information D54 by calculating the amount billed for each billed target on the basis of first billing rule information D50 received from the first billing rule information managing section 102, second billing rule information contained in the metadata D51 received from the service selecting section 105, session information D52 including information on the location (URL) of the service providing server 300 and communication address information, and communication history information D53 received from the communication history recording section 106.

The billing information generating section 110 comprises billing information presenting function 1101 and a digital signature applying function 1102. The billing information presenting function 1101 generates a screen displaying billing information generated by the billing information generating section 110, during a service or after the utilization of the service has been finished. The billing information generating section 110 displays the screen on the display section of the communication terminal 100. The expression "during a service" means that a communication session is connected which has been established by transmitting a service request message, in order to receive service information. The expression "after the utilization of the service" means the communication session has been disconnected.

The digital signature applying function 1102 applies a digital signature to billing information generated.

### (1.2. Billing Server)

Now, the configuration of the billing server 200 will be described. The billing server 200 comprises the configuration of a general server. Specifically, the billing server 200 comprises a CPU that controls the whole billing server 200, a storage section including a ROM (Read Only Memory) that stores a program executed upon activation, a RAM (Random Access Memory) that temporarily stores data, and a hard disk device that stores various data and programs, and a communication interface that controls the transmission of data via the communication network.

The storage section of the billing server 200 stores communication address information of the communication terminal owned by the user and information on the user's various attributes, in association with an ID that identifies the user subscribed to a service contract of a pay information distributing system. The user attribute information contains a service subscription contract form, a contract duration, a service use history, a communication use history, and a payment status. The storage section stores various pieces of information on the service providing server 300 providing the services to the user, such as an ID and a communication address.

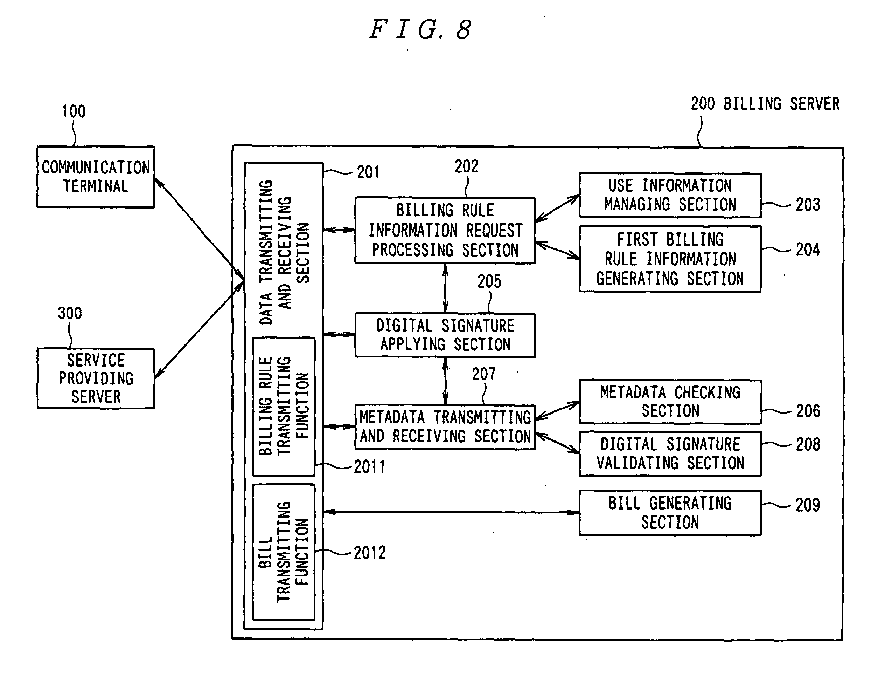

The storage section also stores various programs. The CPU reads any of these programs from the storage section. The CPU then executes the read program to realize a function section shown in FIG. 8, in the billing server 200. As shown in the figure, the billing server 200 comprises a data transmitting and receiving section 201 that communicates data to and from the communication terminal 100 or the service providing server 300 via the communication network, a billing rule information request processing section 202 that processes a billing rule information request message from the communication terminal 100 owned by the user, a user information managing section 203 that holds information on the user, a first billing rule information generating section 204 that generates first billing rule information on the basis of the user attribute information, a digital signature applying section 205 that applies digital signatures to the first billing rule information and metadata, a metadata transmitting and receiving section 207 that controls the transmission and reception of metadata to and from the service providing server 300, a metadata checking section 206 that checks the content of the metadata, a digital signature validating section 208 that validates the digital signature applied to the metadata, and a bill generating section 209 that generates bill information on the basis of billing information associated with the provision of a service.

The data transmitting and receiving section 201 comprises a billing rule transmitting function 2011 and a bill transmitting function 2012. The billing rule transmitting function 2011 transmits first billing rule information generated by the first billing rule information generating section 204, to the communication terminal 100. The bill transmitting function 2012 transmits bill information generated by the bill generating section 209, to the billed target.

Upon receiving billing rule information request message from the data transmitting and receiving section 201 which message has been transmitted by the communication terminal 100, the billing rule information request processing section 202 acquires the user's ID contained in the billing rule information request message. The billing rule information request processing section 202 acquires attribute information corresponding to the user's ID from the user information managing section 203. The billing rule information request processing section 202 transmits the attribute information acquired to the first billing rule information generating section 204.

The first billing rule information generating section 204 generates first billing rule information on the basis of the user attribute information transmitted by the billing rule information request processing section 202. The first billing rule information generating section 204 generates billing rule information indicative of a unit price per packet which is lower for a user who has made a service subscription contract based on a high value added plan and having a long duration and who has appropriately paid the charge.

The digital signature applying section 205 uses a common authentication method to apply digital signatures to first billing rule information generated by the first billing rule information generating section 204 and metadata received from the service providing server 300. The digital signature validating section 208 uses the common authentication method to validate the digital signature applied to the metadata received from the service providing server 300.

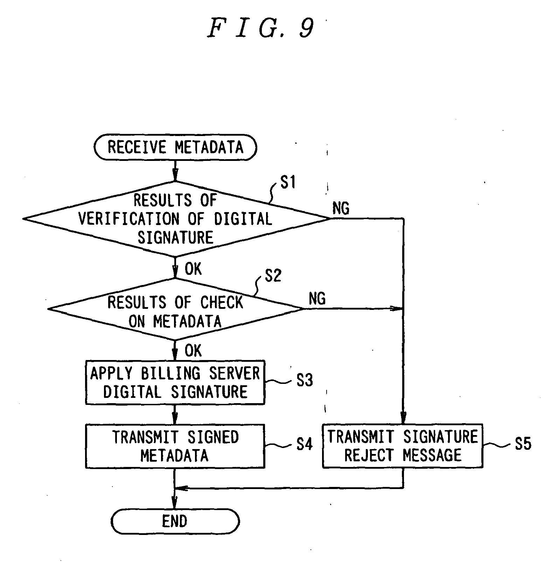

The metadata checking section 206 authorizes metadata issued by the service providing server 300. FIG. 9 shows a procedure to authorize metadata which is executed by the billing server 200 upon receiving the metadata.

First, upon receiving metadata transmitted by the service providing server 300, the metadata transmitting and receiving section 207 of the billing server 200 transmits the metadata from the metadata transmitting and receiving section 207 to the digital signature validating section 208. The digital signature validating section 208 validates the digital signature applied to the metadata (S1). If the digital signature is successfully validated (S1; OK), the metadata checking section 206 checks the data contained in the metadata for validity of the content (S2). Specifically, the metadata checking section 206, for example, validates numerical values for respective billing rates and the total value for the billing rates, checks whether or not the IDs of the billed target, service providing server, and billing server are present in the management information, checks the content of a service, and checks whether or not the service charge is unfairly high. If the metadata has passed the checks (S2; OK), the digital signature applying section 206 applies a digital signature to the metadata (S3) in order to indicate that the metadata is ensured to be valid (is authorized). The digital signature applying section 206 then returns the metadata with the digital signature to the service providing server 300 (S4). On the other hand, if the metadata has failed in the digital signature verification or metadata content check (S1; NG or S2; NG), the metadata transmitting and receiving section 207 transmits a message informing the service providing server 300 that the application of a signature is to be refused (S5).

On the basis of billing information received from the communication terminal 100, the bill generating section 209 issues a bill. Specifically, the bill generating section 209 generates bill information required to charge the amount billed indicated by amount billed information contained in the billing information, to each billed target indicated by billed target information contained in the billing information.

### (1.3. Service Providing Server)

Now, the configuration of the service providing server 300 will be described. Similarly to the billing server 200, the service providing server 300 comprises the hardware configuration of a common server.

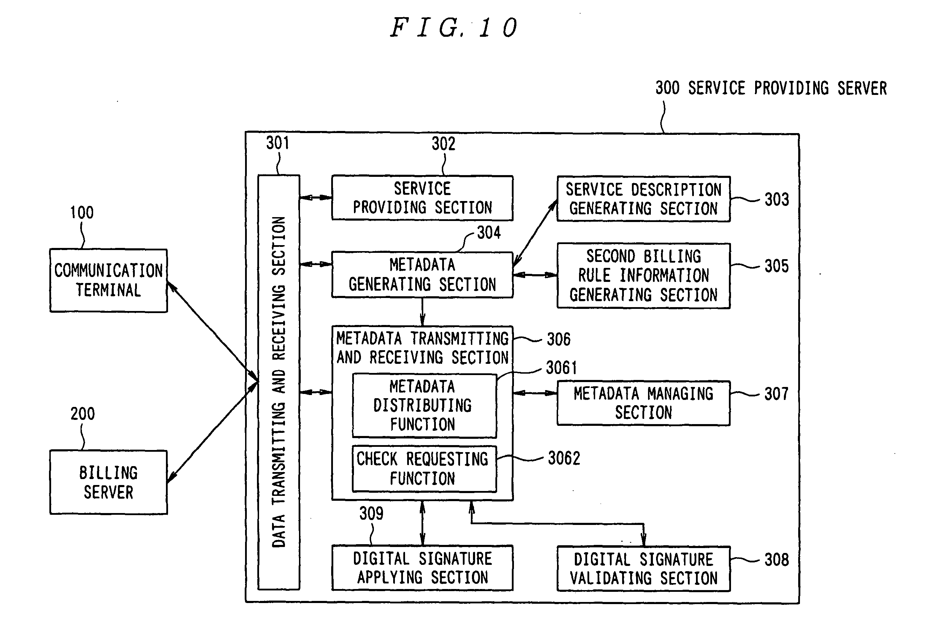

The storage section of the service providing server 300 stores metadata containing service description information on the services provided by the service providing server 300 as well as billing rule information. The storage section also stores service information such as video content and music content. The storage section also stores various programs. The CPU executes any of these programs to realize a function section shown in FIG. 10, in the service providing server 300. As shown in the figure, the service providing server 300 comprises a data transmitting and receiving section 301 that communicates data to and from the communication terminal 100 or the billing server 200 via the communication network, a service providing section 302 that transmits various pieces of service information to the communication terminal 100, a service description generating section 303 that generates service description information describing information on the services, a second billing rule information generating section 305 that generates billing rule information on each service, a metadata generating section 304 that generates metadata on the basis of the service description information and the second billing rule information, a metadata transmitting and receiving section 306 that controls the transmission and reception of the metadata, a metadata managing section 307 that holds the metadata generated, a digital signature applying section 309 that applies a digital signature to the metadata, and a digital signature validating section 308 that validates the digital signature applied by the billing server 200 to the metadata.

The service providing section 302 holds various service information such as video or music content which is provided to the communication terminal 100. Upon receiving a service request message from the communication terminal 100, the service providing section 302 returns service information corresponding to the request.

The service description generating section 303 generates service description information describing information (a service ID, a title, a service type, and the like) on the content of the individual services provided by the service providing section 302. In this case, data is externally inputted from which the service description information is to be generated.

The second billing rule information generating section 305 generates second billing rule information on billing rules inherently set for the individual services provided by the service providing section 302. Data from which the second billing rule information is to be generated is originally set by a service provider and externally inputted.

The metadata generating section 304 generates metadata described in the XML on the basis of service description information generated by the service description generating section 303 and second billing rule information generated by the second billing rule information generating section 305. The digital signature applying section 309 applies a digital signature to metadata generated by the metadata generating section 304.

The metadata transmitting and receiving section 306 controls the delivery of metadata to each section. The metadata transmitting and receiving section 306 comprises a metadata distributing function 3061 and a check requesting function 3062. The metadata distributing function 3061 distributes metadata held in the metadata managing section 307 to the communication terminal 100 via the data transmitting and receiving section 301. The check requesting section 3062 transmits a check request message to the billing server 200 via the data transmitting and receiving section 301, the message requesting the authorization of metadata generated by the metadata generating section 304 and to which the digital signature applying section 309 has applied a digital signature.

The metadata managing section 307 stores and holds the metadata authorized by the billing server 200 and to which the digital signature of the billing server 200 has been applied. The digital signature validating section 308 validates the digital signature applied by the billing server 200 to the metadata.

### (2. Operation)

Description will be given of operations of the pay service providing system configured as described above.

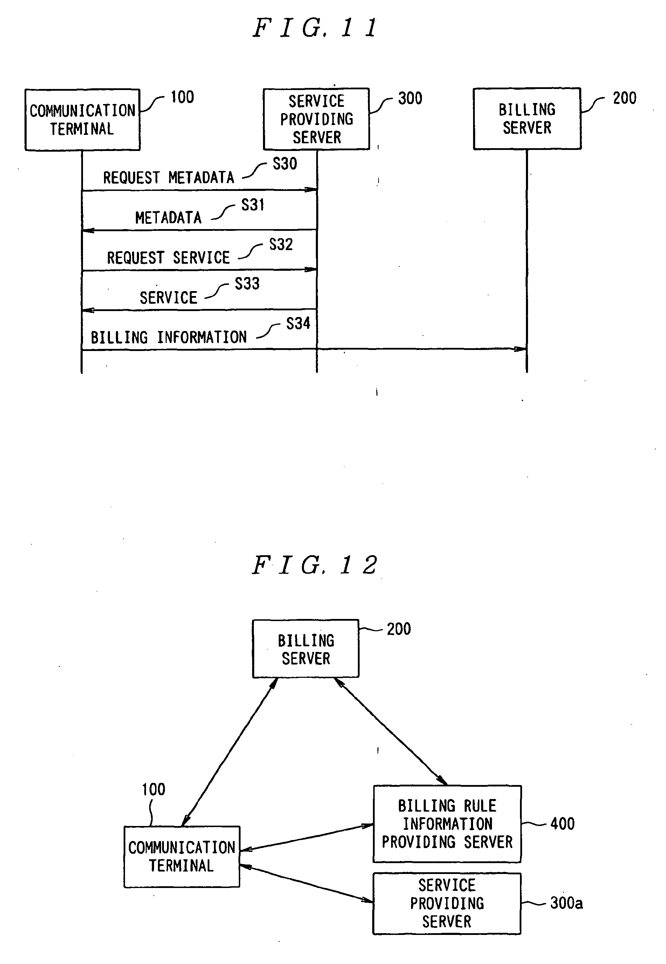

With reference to the sequence diagram in FIG. 11, description will be given below of an example of operations performed when a user A receives a service for distribution of a "content movie A". FIG. 11 is a sequence diagram showing a procedure of communication executed by the pay information providing system when the communication terminal 100 transmits a metadata request message to the system.

Preconditions will be described below. The above described pay service providing program has already been downloaded from the server and stored in the storage section of the communication terminal 100. Further, the billing server 200 has already issued first billing rule information and authorized metadata. The first billing rule information managing section 102 of the communication terminal 100 holds the first billing rule information D50 issued by the billing server 200 and shown in FIG. 7. Furthermore, the service providing server 300 holds the metadata D51 on the "content movie A" authorized by the billing server 200 and shown in FIG. 7.

Moreover, the metadata D51 is transmitted by the service providing server 300 to the communication terminal 100 without being altered.

Moreover, when the "content movie A" is completely downloaded (the utilization of the service is finished), the communication history recording section 106 has already recorded the communication history information 53, shown in FIG. 7. Upon finishing downloading the "content movie A", the user A operates the operation section of the communication terminal 100 to instruct on presentation of billing information.

First, the user A operates the operation section of the communication terminal 100 to instruct on a request for metadata on the desired service "content movie A". Thus, the communication terminal 100 senses the instruction and the data transmitting and receiving section 101 transmits a metadata request message to the service providing server 300 which message requests metadata on the "content movie A" (S30).

The data transmitting and receiving section 301 of the service providing server 300 transfers the received metadata request message from the metadata transmitting and receiving section 306 to the metadata managing section 307. The metadata managing section 307 extracts the metadata D51 on the "content movie A", shown in FIG. 7, from the held data and returns the metadata D51 to the metadata transmitting and receiving section 306. The metadata distributing function 3061 of the metadata transmitting and receiving section 306 distributes the metadata to the communication terminal 100 via the data transmitting and receiving section 301 (S31).

The billing rule acquiring function 1011 of the data transmitting and receiving section 101 acquires the metadata D51 transmitted by the service providing server 300. The billing rule acquiring function 1011 transfers the metadata D51 acquired to the metadata managing section 103. Since the digital signature is applied to the metadata D51, the metadata managing section 103 transmits the metadata to the digital signature validating section 104. The digital signature validating section 104 validates the metadata D51 in accordance with the flow shown in FIG. 5. In this case, since the metadata D51 has not been altered, the digital signature validating section 104 returns the results of the verification to the metadata managing section 103 which results indicate that the verification has been successful. Since the metadata D51 has been successfully validated, the metadata managing section 103 transmits the metadata D51 to the service selecting section 105.

The service selecting section 105 extracts the URL "http://xxx.yyy.zzz/yyy" of the service providing server 300 and second billing rule information (the service charge "200 yen", the billing rate "50%" corresponding to the communication billed target "provider_a", and the billing rate "50%" corresponding to the communication billed target "user_a") from the metadata D51 transmitted by the metadata managing section 103. Then, the service selecting section 105 accesses a DNS server to acquire the IP address "aaa.bbb.ccc.ddd" of the service providing server 300 corresponding to the URL "http://xxx.yyy.zzz/yyy" of the service providing server 300. The service selecting section 105 generates session information D52 in association with the URL and the IP address acquired.

Before requesting a service, the predicted information presenting function 1051 of the service selecting section 105 calculates a predicted service and communication charges on the basis of the first billing rule information D50 and the second billing rule information, described in the metadata D51. The predicted information presenting function 1051 generates a charge prediction screen on which the calculated charges are displayed. The predicted information presenting function 1051 then displays the screen on the display section of the communication terminal 100.

The user A operates the operation section of the communication terminal 100 to select "Select (Consent to Pay)" on the charge prediction screen. Upon sensing the selection, the consenting function 1052 of the service selecting section 105 generates a service requests message requesting the "content movie A". The data transmitting and receiving section 101 then transmits the generated service request message to the service providing server 300 identified by the IP address acquired "aaa.bbb.ccc.ddd" (S32).

The service selecting section 105 transmits the second billing rule information and the session information D52 to the billing information generating section 110 in order to execute a billing process on the requested service.

Upon receiving the service request message from the communication terminal 100, the data transmitting and receiving section 301 of the service providing server 300 transfers the message to the service providing section 320. The service providing section 302 extracts the service information on the "content movie A" from the held service information and returns this service information to the data transmitting and receiving section 301. The data transmitting and receiving section 301 transmits the service information to the communication terminal 100 (S33).

Upon receiving the service information, the data transmitting and receiving section 101 of the communication terminal 100 transmits the service information to the communication history recording section 106. While receiving the service information, the communication history recording section 106 records a communication history including the number of packets received and a communication time. Furthermore, the communication history recording section 106 transfers the service information to the service utilizing section 107.

The service utilizing section 107 converts the received service information into a reproducible format and displays the motion picture of the movie A on the display section, while outputting sounds from the speaker.

Once the service information on the "content movie A" has been completely downloaded and the session for the distribution of the service information has been disconnected, the communication history recording section 106 transmits a notification to the billing information generating section 110 which indicates that the utilization of the service has been finished. Upon receiving the notification indicating that the utilization of the service has been finished, the billing information generating section 110 calculates a service charge for the "content movie A" and a communication charge associated with the utilization of the service. Specifically, the billing information generating section 110 receives the first billing rule information D50, shown in FIG. 7, from the billing rule information managing section 102. Further, since the session information D52 already provided by the service selecting section 105 indicates that the IP address is "aaa.bbb.ccc.ddd", the billing information generating section 110 receives the communication history information D53 (indicating that 2,000 packets have been received from the service providing server 300 identified by the IP address "aaa.bbb.ccc.ddd") from the communication history recording section 106. Since the number of incoming packets contained in the received communication history information D53 is "2,000", which is less than "10,000", the billing information generating section 110 recognizes that the communication unit price is "0.01 yen/packet, on the basis of the first billing rule information D50. Further, on the basis of the second billing rule information (the service charge "200 yen", the billing rate "50%" corresponding to the communication billed target "provider_a", and the billing rate "50%" corresponding to the communication billed target "user_a") provided by the service selecting section 105, the billing information generating section 110 calculates the following amounts for the billed target "user_a": the service charge: 200 yen; the communication charge: 2,000 packets _ 0.01 yen/packet _ 0.5 = 10 yen; the amount billed: 210 yen. The billing information generating section 110 calculates the following amounts for the billed target "provider_a": the service charge: 0 yen; the communication charge: 2,000 packets _ 0.01 yen/packet _ 0.5 = 10 yen; the amount billed: 10 yen. The billing information generating section 110 thus generates billing information D54, shown in FIG. 7.

At this time, the user A operates the operation section of the communication terminal 100 to instruct on presentation of the billing information as described above. Thus, the billing information presenting function 1101 of the billing information generating section 110 generates a screen displaying the calculated billing information D54. The billing information presenting function 1101 then displays the screen on the display section of the communication terminal 100.

On the other hand, the digital signature applying function 1102 of the billing information generating section 110 applies a digital signature to the billing information D54 generated. The data transmitting and receiving section 101 transmits the billing information D54 to the billing server 200 (S34).

The bill generating section 209 of the billing server 200 extracts the billed target information and amount billed information contained in the billing information D54 received from the communication terminal 100. Then, the bill generating section 209 generates bill information required to charge the amount billed "210 yen" to the billed target "user_a" and bill information required to charge the amount billed "10 yen" to the billed target "provider_a". The bill generating section 209 reads, from the storage section, the communication address information required to identify the device owned by each billed target. Then, the bill generating section 209 adds the communication address information to the bill information and then transmits the bill information to the data transmitting and receiving section 201. The bill transmitting function 2012 of the data transmitting and receiving section 201 transmits the bill information to the device identified by the communication address information.

Thus, this pay service providing system can independently manage the network billing rule information and the service billing rule information. The billing rule information can be customized for each user, thus providing a flexible billed entity corresponding to the user's profile or service model.

### (Second Embodiment)

In a second embodiment which will now be described, the processing function for the service billing rule and the metadata managing and distributing function, both provided in the service providing server 300 according to the first embodiment, are provided in separate devices.

FIG. 12 is a block diagram showing the configuration of a pay service providing system according to a second embodiment. The pay service providing system in the figure comprises not only the devices provided in the pay service providing system according to the first embodiment but also a billing rule information providing server 400 as a new component.

The billing rule information providing server 400 has a function to inform the communication terminal 100 of second billing rule information on a charge for each service and a communication charge required to utilize a service.

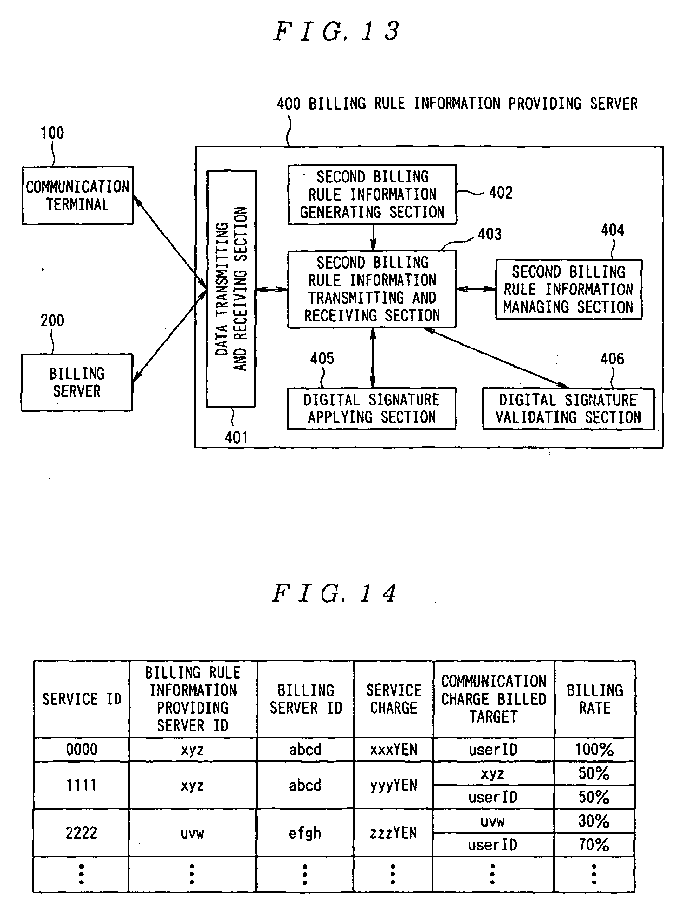

FIG. 13 is a block diagram showing the configuration of the billing rule information providing server 400, shown in FIG. 12. The billing rule information providing server 400 comprises a data transmitting and receiving section 401, a second billing rule information generating section 402, a second billing rule information transmitting and receiving section 403, a second billing rule information managing section 404, a digital signature applying section 405 that applies the digital signature of the billing rule information providing server 400 to the second billing rule information, and a digital signature validating section 406 that validates the digital signature applied by the billing server 200 to the second billing rule information.

The second billing rule information generating section 402 generates second billing rule information defining charges for services provided by each service providing server 300a as well as a communication charge required to utilize each service.

FIG. 14 shows an example of information elements described in the second billing rule information. The second billing rule information describes only information on billing rules and does not contain by information on the content of the services ("title", "URL", and "service type"). This is because the information on the content of the services is generated by the service providing server 300a. The billing rule information is described in the XML. The digital signature applying section 405 applies the digital signature of the billing rule information providing server 400 to the billing rule information. The digital signature applying section 405 then transmits the billing rule information to the communication terminal 100.

The digital signature applying section 405 applies a digital signature to the second billing rule information. The second billing rule information transmitting and receiving section 403 transmits a message to the billing server 200 which request the authorization of the second billing rule information to which the digital signature is applied. The second billing rule information managing section 404 holds the returned second billing rule information which has been completely authorized and to which the digital signature of the billing server 200 has been applied.

The configuration of the service providing server 300a according to the second embodiment corresponds to the configuration of the service providing server 300 according to the first embodiment from which the processing function for billing rules provided in the billing rule information providing server 400 has been removed.

Specifically, the billing rule information generating section 305a according to the second embodiment generates location information indicating the location of second billing rule information without generating second billing rule information as in the case of the billing rule information generating section 305 according to the first embodiment. The location information, for example, represents a URL corresponding to the billing rule information in the billing rule information providing server 400. The billing rule information generating section 305a transmits the location information generated to the metadata generating section 304. The metadata generating section 304 generates metadata by adding the location information to service description information received from the service description generation section 303. The transmitting and receiving section 306 transmits the metadata to the communication terminal 100.

In the second embodiment, on the basis of the location information of the second billing rule information described in the metadata transmitted by the service providing server 300a, the metadata managing section 103 of the communication terminal 100 has a function to download billing rule information on a service from the billing rule information providing server 40.

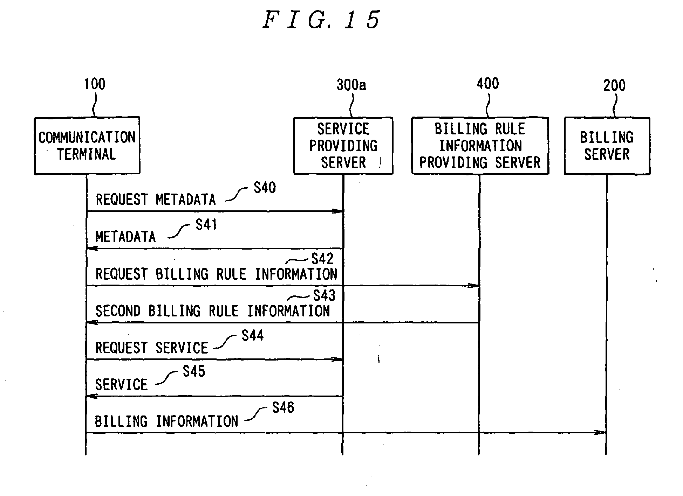

Description will be given below of an operation sequence executed by the pay service providing system configured as described above. FIG. 15 is a sequence diagram showing a communication procedure executed by the pay information providing system when the communication terminal 100 transmits a metadata request message to the system.

Preconditions will be described below. The first billing rule information managing section 102 of the communication terminal 100 holds first billing rule information issued by the billing server 200. The metadata managing section 307 of the service providing server 300a holds metadata authorized by the billing server 200. Further, the second billing rule information managing section 404 of the billing rule information providing server 400 holds second billing rule information.

FIG. 15 is a sequence diagram that is different from the sequence diagram shown in FIG. 11 according to the first embodiment in that new steps S42 and S43 are added. Upon downloading metadata on a desired service from the service providing server 300a (S41), the communication terminal 100 extracts the location information of the second billing information on the service contained in the downloaded metadata. The communication terminal 100 generates and transmits a billing rule information request message using the extracted location information as a transmission destination address (S42). The billing rule information providing server 400 identified by the location information receives the billing rule information request message and transmits the second billing rule information to the communication terminal 100 (S43). The other sequences are similar to those of the first embodiment.

With the pay service providing system according to the second embodiment, service information required to provide a service and second billing rule information on the service are received from separate servers. Accordingly, the respective pieces of information can be received via different communication networks. For example, the communication terminal 100 can receive second billing rule information via a secure mobile communication network and content via a radio LAN, which is less secure but high-speed and inexpensive. The second embodiment described above is expected to reduce loads on servers required to protect billing rule information, increase the speed at which contents are downloaded, and reduce communication costs.

### (Third Embodiment)

Now, a third embodiment will be described. A pay service providing system according to the third embodiment includes a service providing server 500 also operating as a communication terminal and comprising a function to receiving a service and a function to provide the provided service to another device.

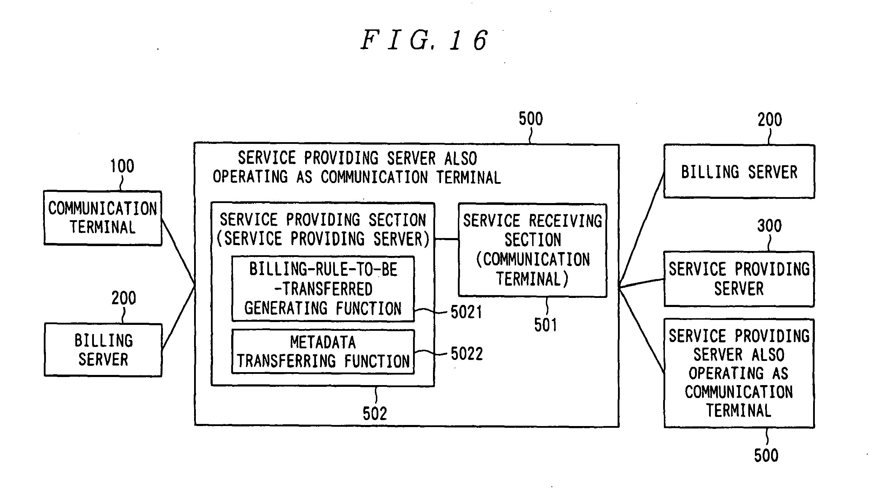

The service providing server 500 also operating as a communication terminal comprises the hardware configuration of a common computer. The service providing server 500 also operating as a communication terminal has a storage section that stores a program required to realize the functions of the communication terminal 100, shown in FIG. 4, and a program required to realize the functions of the service providing server 300, shown in FIG. 10. A CPU of the service providing server 500 also operating as a communication terminal executes these programs to realize the functions of the service providing server 500 also operating as a communication terminal as shown in FIG. 16. As shown in this figure, the service providing server 500 also operating as a communication terminal comprises a service receiving section 501 and a service providing section 502. The service receiving section 501 has functions similar to those of the communication terminal 100, shown in FIG. 4. The service receiving section 501 receives metadata and service information to generate billing information on a service utilized.

The service providing section 502 has functions similar to those of the service providing server 300, shown in FIG. 10. The service providing section 502 distributes service information and metadata to the communication terminal 100 and another service providing server 500 also operating as a communication terminal.

The service providing section 502 comprises a billing-rule-to-be-transferred generating function 5021 and metadata transferring function 5022. The billing-rule-to-be-transferred generating function 5021 generates metadata to be transferred to another communication terminal 100 or service providing server 500 also operating as a communication terminal. The metadata generated may be received by the service receiving section 501 from the service providing server 300 or may be newly generated by the billing-rule-to-be-transferred generating function 5021. Alternatively, the metadata may be obtained by modifying metadata received by the service receiving section 501. If the user inputs billing rules for the billed target, the billing rate, and the like from the operation section, the billing-rule-to-be-transferred generating function 5021 generates metadata which includes the inputted billing rule information.

A metadata transfer function 5022 transmits metadata generated by the billing-rule-to-be-transferred generating function 5021 to the user specified communication terminal 100 or service providing server 500 also operating as a communication terminal.

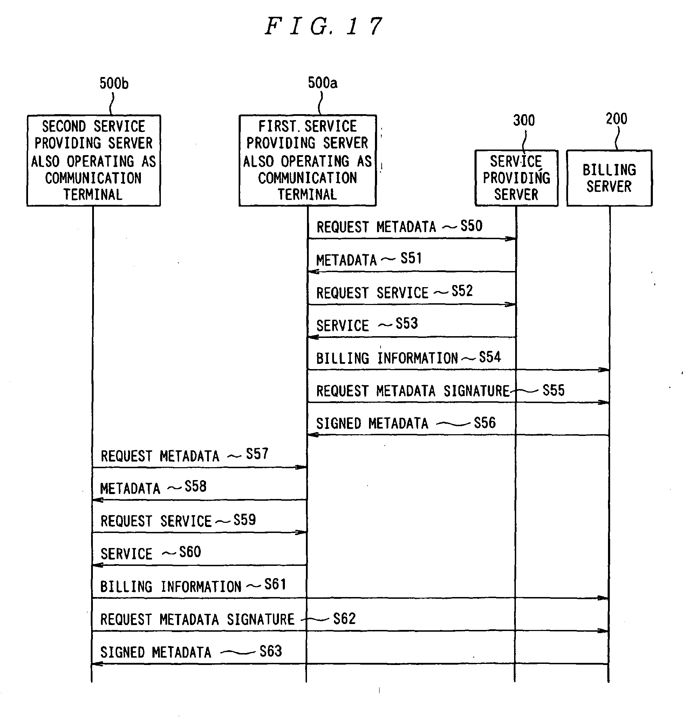

With reference to FIG. 17, description will be given of an operation sequence executed by the pay service providing system including the above described service providing server 500 also operating as a communication terminal. Description will be given of an example of operation in which a first service providing server 500a also operating as a communication terminal receives metadata and service information on the "content movie A", changes billing rules in the received metadata, and transfers the metadata with the changed billing rule to a second service providing server 500b also operating as a communication terminal.

The procedure of a request for metadata (S50) to transmission of billing information (S54) executed by the first service providing server 500a also operating as a communication terminal, shown in FIG. 17, is similar to that of a request for metadata (S30) to transmission of billing information (S34) according to the first embodiment, shown in FIG. 11. Specifically, the first service providing server 500a also operating as a communication terminal receives the metadata and service information on the "content movie A" (S50 to S53). The first service providing server 500a also operating as a communication terminal then generates and transmits billing information to the service providing server 300 (S54).

The user A enjoys the "content movie A" and then executes a process of generating metadata to be transferred in order to introduce the "content movie A" to a friend of the user. Specifically, the user A operates the operation section of the service providing server 500a also operating as a communication terminal to, for example, input an instruction on generation of metadata to be transferred while inputting information indicating that the user A will pay a communication charge that is otherwise borne by the friend in connection with the downloading of the "content movie A".

The billing-rule-to-be-transferred generating function 5021 of the first service providing server 500a also operating as a communication terminal changes the communication billed target in the second billing rule information contained in the metadata on the "content movie A" to the "user A". The billing-rule-to-be-transferred generating function 5021 thus generates metadata to be redistributed. The metadata transfer function 5022 transmits the metadata generated by the billing-rule-to-be-transferred generating function 5021 to the billing server 200 containing a metadata signature request message requesting the metadata to be authorized (S55). The billing server 200 validates the metadata and then applies a digital signature to it. The billing server 200 then returns the resulting metadata to the service providing server 500a also operating as a communication terminal (S56). The service providing server 500a also operating as a communication terminal stores the authorized metadata in the storage section.

The above procedure enables the first service providing server 500a also operating as a communication terminal to provide another device with the service for distribution of the "content movie A", similarly to the service providing server 300 providing another device with the service for distribution of the "content movie A". The steps S55 and S56 for requesting authorization may be omitted if the authorization by the billing server 200 is not required.

The steps S57 to S61 in FIG. 17 indicate a procedure executed by the first service providing server 500a also operating as a communication terminal to provide a service to the second service providing server 500b also operating as a communication terminal. The service providing procedure shown in the steps S57 to S61 is the same as that shown in the steps S30 to S34 in FIG. 11. If the user A operates the service providing server 500a also operating as a communication terminal to instruct on distribution of the metadata on the "content movie A" to the service providing server 500b also operating as a communication terminal (S58), it is possible to omit the step S57 of requesting metadata from the service providing server 500b also operating as a communication terminal.

With the pay service providing system shown in the third embodiment, the service providing server 500 also operating as a communication terminal can add original billing rules to received metadata and then redistribute the metadata to another communication terminal. The diffusion of services can thus be accelerated. Further, service requests do not concentrate at the service providing server 300. Therefore, the present embodiment is expected to, for example, increase the capacity and improve fault resistance.

### (Fourth Embodiment)

Now, a fourth embodiment will be described. A communication terminal 100a according to the fourth embodiment comprises not only the function sections of the communication terminal 100 according to the first embodiment but also a prepaid billing processing section 111 and a prepaid amount storage section 112.

The prepaid amount storage section 112 includes a nonvolatile memory provided in the communication terminal 100 and data stored in the nonvolatile memory. The prepaid storage section 112 stores prepaid amount information indicating the amount of money prepaid in order to utilize a service provided by the pay information providing system.

The storage section of the communication terminal 100a stores a program required to execute a process of paying the amount billed for the utilization of the service. A CPU of the communication terminal 100a reads the program from the storage section to execute it to realize the functions of the prepaid billing processing section 111 in the communication terminal 100a. The prepaid billing processing section 111 executes a process of paying for the service provision by subtracting the amount billed indicated by the billing information generated by the billing information generating section 110 from the amount of money indicated by the prepaid amount information stored in the prepaid amount storage section 112.

The communication terminal 100 is thus provided with the charge paying function and can therefore complete a payment process for the user. Accordingly, the communication terminal 100 need not transmit the billing information to the billing server 200, thus allowing the payment process to be promptly finished. This improves the user's convenience. Further, the user can check the balance of the payment to utilize the services systematically.

### (Fifth Embodiment)

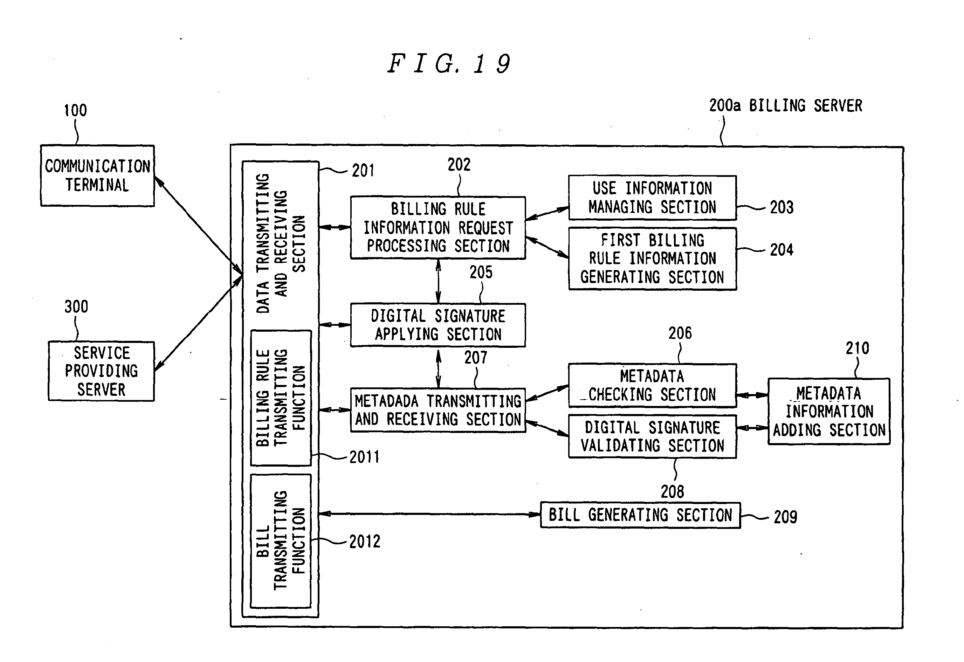

Now, a fifth embodiment will be described. A billing server 200a according to a fifth embodiment comprises not only the function sections of the billing server 200 according to the first embodiment but also a metadata information adding section 210 shown in FIG. 19.

The storage section of the billing server 200 stores a program that adds information to metadata. The CPU of the communication terminal 100 reads the program from the storage section and executes it to realize the functions of the metadata information adding section 210 of the billing server 200. The metadata information adding section 210 adds at least either of new billing rule information and new service description information to metadata received from the service providing server 300. The added information may be described in a program or externally inputted.

The storage section of the communication terminal 100 also stores a program that displays links to contents on the display section if the information added to the metadata is interpreted to find that the added information contains a URL.

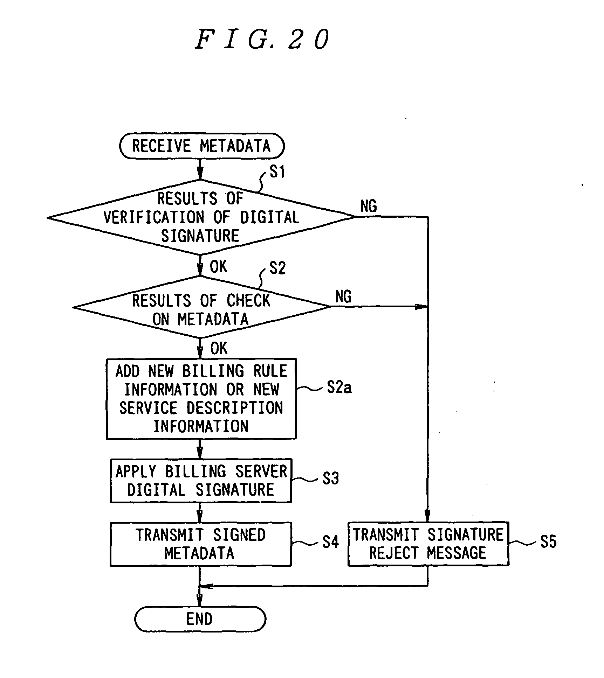

With reference to FIG. 20, description will be given of operations of the above configuration performed when the billing server 200 receives metadata from the service providing server 300. In this case, the metadata information adding section 210 adds a communication charge discount rate of "50%" for the billed target to the metadata received from the service providing server 300 as new billing rule information. Further, the metadata information adding section 210 adds advertisement information on a network operator owning the billing server 200, as new service description information.

The metadata generating section 304 of the service providing server 300 is assumed to generate the metadata D51 shown in FIG. 7. The metadata transmitting and receiving section 306 is assumed to have transmitted a check request message to the billing server 200 to request the metadata D51 to be authorized.

In this case, in FIG. 20, the steps S1, S2, and S5 executed by the billing server 200 upon receiving the check request message is similar to the steps S1, S2, and S5, shown in FIG. 9 according to the first embodiment.

In the step S2, if the results of the check on the metadata D51 are valid (S2; OK), the metadata information adding section 210 adds new billing rule information and new service description information to the metadata D51. Specifically, the metadata information adding section 210 adds the communication rate discharge rate "50%" as new billing rule information and the additional service title "advertisement", additional service URL "http://d.e.f./g", and service type "video" as new service description information.

Then, as in the case of the first embodiment, the digital signature applying section 205 adds a digital signature to the metadata to which additional information has been applied (S3). The digital signature applying section 205 transmits the metadata to the service providing server 300 (S4).

The metadata managing section 307 of the service providing server 300 holds the metadata received from the billing server 200.

Then, the communication terminal 100 is assumed to have transmitted a metadata request message for requesting the metadata to which the above described additional information has been applied, to the service providing server 300. Thus, when the communication terminal 100 receives metadata from the service providing server 300, the display section of the communication terminal 100 displays links to advertisement contents, in addition to the links to the movie contents of the title "movie_A".

It is allowable to immediately download both movie content and advertisement content rather than displaying the links.

In this manner, the billing server 200 can add billing rule information and service description information to metadata. This makes it possible to realize more flexible and diversified billing services.

### (3. Variations)

(1) In the description of operations according to the first embodiment, the billing information generating section 110 calculates billing information when the utilization of a service is finished, and the billing information presenting function 1101 displays the billing information on the display section of the communication terminal 100. However, the invention is not limited to this aspect. While the service is being utilized, the billing information generating section 110 may calculate billing information on the basis of the number of packets received recorded by the communication history recording section 106. The billing information presenting function 1101 may then display the calculated billing information on the display section. In this case, the billing information generating section 110 may sequentially calculate the amount of bill for the service being utilized, so that the billing information presenting function 1101 may sequentially display billing information. Alternatively, the amount of bill may be calculated and displayed only when the user's request for display of billing information is sensed.
(2) The communication history recording section 106 and billing information generating section 110 of the communication terminal 100 are desirably realized by tamper-resistant software and are desirably implemented on tamper-resistant hardware. Specifically, to realize these sections by tamper-resistant software, for example the program for storing the communication history and the program for generating billing information are described in an object-oriented language such as Java (registered trade mark). Then, it is desirable to encapsulate the communication history, the program handling the communication history, the billing information, and the program handling the billing information (objects) so that the objects cannot be externally accessed. Alternatively, the communication history and the billing information may be enciphered using a common enciphering technique. To implement these sections on tamper-resistant hardware, it is possible to store the programs in a non-writable ROM or to store the billing information, communication history, and the programs handling these pieces of information in a storage medium such as an IC card which can only be accessed using an interface.
   This hinders users from altering the communication history recording section 106 and the billing information generating section 110. Consequently, the communication terminal 100 can securely perform billing processes.
(3) The service providing server 300 may calculate the service charge for a provided service and send a bill to the billing server 200.
   In this case, the service providing server 300 comprises means for recording a use history for the provision of service information, means for calculating amount billed information from the use history, and means for transmitting data for a service charge containing the amount billed information, to the billing server 200.
   Thus, the billing server 200 can check billing information received from the communication terminal 100, owned by the user, against the amount billed information received from the service providing server 300. This realizes a more reliable and more accurate billing process. However, since a packet loss may occur, the service providing server 300 must be provided with a function to check whether or not a transmitted packet has arrived at the communication terminal 100.
(4) In the above described embodiments, the digital signatures are used to validate the billing rule information and the metadata. If the billing rule information and the metadata are transmitted and received via a secure communication path, the devices 100, 200, 300, and 400 need not be provided with the digital signature validating or applying function. That is, it is possible to omit the digital signature validating section 104, provided in the communication terminal 100, the digital signature applying section 205 and digital signature validating section 208, provided in the billing server 200, the digital signature applying section 309 and digital signature validating section 308, provided in the billing server 300, and the digital signature applying section 405 and digital signature validating section 406, provided in the billing server 400.
(5) In connection with the above described embodiments, FIG. 10 shows that the service providing section 302 and service description generating section 303 of the service providing server 300 are independent elements (that is, they do not transmit or receive data to or from each other). However, the invention is not limited to this aspect. For example, service description information can be generated on the basis of service information accumulated in the service providing section 302. If the service information is on videos, it is contemplated that characteristic information may be extracted from the videos so that service description information can be generated from the extracted characteristic information.
(6) In the above described embodiments, the billing rule information and the metadata are described in the XML. However, the invention is not limited to this aspect. The billing rule information and the metadata may be described in, for example, an HTML (Hyper Text Markup Language) or may be a simple array of data that is not described in the markup language.
(7) In the above described embodiments, the pay service providing program required to execute a billing process on a service is downloaded from the server and stored in the terminal device 100. However, the invention is not limited to this aspect. For example, the pay service providing program may be recorded in a recording medium such as a floppy (registered trade mark) disk or a CD-ROM (Compact Disk Read Only Memory) so as to be installed in the terminal device 100 using the recording medium. Alternatively, the pay service providing program may be prestored in the terminal device 100 before the terminal device 100 is shipped.
(8) In the above described embodiments, the communication terminal 100 generates first billing rule information on the basis of the user's attribute information. However, the service providing server 300 may generate second billing rule information on the basis of the user's attribute information.

In this case, for example, the second billing rule information generating section 305 generate a plurality of second billing rule information for one service in accordance with the user's attribute information. On the basis of service description information on a service generated by the service description generating section 303 and a plurality of second billing rule information for the service generated by the second billing rule information generating section 305, the metadata generating section 304 generates as many metadata as the second billing rule information. The metadata managing section 307 holds metadata generated in accordance with the user's attributes. Then, upon receiving a metadata request message requesting certain metadata, from the terminal device 100, the metadata managing section 307 selects the corresponding metadata in accordance with the user's attribute information. The metadata managing section 307 then returns the metadata to the terminal device 100.

## Claims

1. A communication terminal (100) that receives provision of a service via communication network, comprising
billing rule acquiring means (1011) for acquiring billing rule information on the provision of said service from at least one external apparatus,
wherein said billing rule information contains at least either of first billing rule information required to deliver service information and second billing rule information individually set for said service information;
communication history recording means (106) for recording communication history of reception, via communication network, of service information required to provide said service;
billing information generating means (110) for generating information on billing of the provision of said service on the basis of the billing rule information acquired from said billing rule acquiring means (1011) and the communication history recorded by said communication history recording means (106);
the communication terminal is **characterized by** further comprising
predicted billing information presenting means (1051) for presenting billing information associated with use of said service which information is predicted before said service is utilized, on the basis of the billing rule information acquired from said billing rule acquiring means (1011); and
consenting means (1052) for transmitting a service request message for requesting said service only if a signal is sensed which consents to payment of the billing information presented by said predicted billing information presenting means (1051).

2. The communication terminal according to claim 1, wherein at least either of said first billing rule information and said second billing rule information is determined in accordance with attributes of a user owning the communication terminal (100).

3. The communication terminal (100) according to any of claims 1 to 2, further comprising at least:
digital signature validating means (104) for validating a digital signature applied to data containing said billing rule information; or
digital signature applying means for applying a digital signature to billing information generated by said billing information generating means (110).

4. The communication terminal (100) according to any of claims 1 to 3, further comprising:
prepay information storage means for storing prepay information representative of the amount of money prepaid in order to utilize said service; and
prepaid billing processing means for paying said amount of money by subtracting the amount of money to be billed which amount is represented by the billing information generated by said billing information generating means, from the amount of money represented by the prepay information stored in said prepay information storage means.

5. The communication terminal (100) according to any of claims 1 to 4, further comprising billing information presenting means (1101) for presenting billing information associated with the use of said service and calculated either during or after the use of said service.

6. The communication terminal (100) according to any of claims 2 to 5, wherein said first billing rule includes a billing rule for the communication network,
said communication history recording section (106) records communication history for the communication network, and
said billing information generating section (110) generates billing information for the communication network.

7. The communication terminal (100) according to any of claims 1 to 6, further comprising:
billing-rule-to-be-transferred generating means for generating billing rule information to be transferred on a service corresponding to the billing rule information acquired from said billing rule acquiring means (1011); and
metadata transferring means for transferring billing rule information to be transferred generated by said billing-rule-to-be-transferred generating means and service description information describing information on said service.

8. A program for allowing a computer to execute:
a billing rule acquiring procedure to acquire billing rule information on provision of a service;
a communication history recording procedure to record communication history of reception, via communication network, of service information required to provide said service;
a billing information generating procedure to generate information on billing of the provision of said service on the basis of the billing rule information acquired from said billing rule acquiring procedure and the communication history recorded by said communication history recording procedure,
wherein said billing rule information contains at least either of first billing rule information required to deliver said service information and second billing rule information individually set for said service information;
the program is **characterized by** allowing a computer to further execute
predicted billing information presenting procedure for presenting billing information associated with use of said service which information is predicted before said service is utilized, on the basis of the billing rule information acquired from said billing rule acquiring procedure; and
consenting procedure for transmitting a service request message for requesting said service only if a signal is sensed which consents to payment of the billing information presented by said predicted billing information presenting procedure.

## Patentansprüche

1. Kommunikationsendgerät (100), das eine Bereitstellung eines Dienstes über ein Kommunikationsnetz empfängt und umfasst:
Fakturierungsregel-Erfassungsmittel (1011), um Fakturierungsregelinformationen über die Bereitstellung des Dienstes von wenigstens einer externen Vorrichtung zu erfassen,
wobei die Fakturierungsregelinformationen erste Fakturierungsregelinformationen, die erforderlich sind, um Dienstinformationen auszugeben, und/ oder zweite Fakturierungsregelinformationen, die für die Dienstinformationen individuell festgelegt werden, enthalten;
Kommunikationshistorie-Aufzeichnungsmittel (106), um die Kommunikationshistorie des Empfangs über das Kommunikationsnetz von Dienstinformationen, die für die Bereitstellung des Dienstes erforderlich sind, aufzuzeichnen;
Fakturierungsinformation-Erzeugungsmittel (110), um anhand der durch die Fakturierungsregel-Erfassungsmittel (1011) erfassten Fakturierungsregelinformationen und der durch die Kommunikationshistorie-Aufzeichnungsmittel (106) aufgezeichneten Kommunikationshistorie Informationen über die Fakturierung der Bereitstellung des Dienstes zu erzeugen;
wobei das Kommunikationsendgerät **dadurch gekennzeichnet ist, dass** es ferner umfasst:
Mittel (1051) zum Darstellen vorhergesagter Fakturierungsinformationen, um Fakturierungsinformationen, die der Nutzung des Dienstes zugeordnet sind, darzustellen, wobei die Informationen anhand der durch die Fakturierungsregel-Erfassungsmittel (1011) erfassten Fakturierungsregelinformationen vorhergesagt werden, bevor der Dienst genutzt wird; und
Zustimmungsmittel (1052), um eine Dienstanforderungsnachricht für die Anforderung des Dienstes nur dann zu senden, wenn ein Signal erfasst wird, das der Bezahlung der Fakturierungsinformationen, die durch die Mittel (1051) für die Darstellung vorhergesagter Fakturierungsinformationen dargestellt werden, zustimmt.

2. Kommunikationsendgerät nach Anspruch 1, wobei die ersten Fakturierungsregelinformationen und/oder die zweiten Fakturierungsregelinformationen in Übereinstimmung mit Attributen eines Anwenders, dem das Kommunikationsendgerät (100) gehört, bestimmt werden.

3. Kommunikationsendgerät (100) nach einem der Ansprüche 1 bis 2, das ferner wenigstens umfasst:
Mittel (104) zum Validieren einer digitalen Signatur, um eine digitale Signatur, die an Daten, die die Fakturierungsregelinformationen enthalten, angebracht ist, zu validieren; oder
Mittel zum Anbringen einer digitalen Signatur, um eine digitale Signatur an Fakturierungsinformationen, die durch die Fakturierungsinformation-Erzeugungsmittel (110) erzeugt werden, anzubringen.

4. Kommunikationsendgerät (100) nach einem der Ansprüche 1 bis 3, das ferner umfasst:
Vorauszahlungsinformation-Speichermittel, um Vorauszahlungsinformationen zu speichern, die den im Voraus bezahlten Geldbetrag für die Nutzung des Dienstes darstellen; und
Vorauszahlungsfakturierungs-Verarbeitungsmittel, um den Geldbetrag durch Subtrahieren des zu fakturierenden Geldbetrags, der durch die durch die Fakturierungsinformation-Erzeugungsmittel erzeugten Fakturierungsinformationen dargestellt wird, von dem Geldbetrag, der durch die in den Vorauszahlungsinformation-Speichermitteln gespeicherten Vorauszahlungsinformationen dargestellt wird, zu bezahlen.

5. Kommunikationsendgerät (100) nach einem der Ansprüche 1 bis 4, das ferner Fakturierungsinformation-Darstellungsmittel (1101) umfasst, um Fakturierungsinformationen, die der Nutzung des Dienstes zugeordnet sind und entweder während oder nach der Nutzung des Dienstes berechnet werden, darzustellen.

6. Kommunikationsendgerät (100) nach einem der Ansprüche 2 bis 5, wobei
die erste Fakturierungsregel eine Fakturierungsregel für das Kommunikationsnetz enthält,
der Kommunikationshistorie-Aufzeichnungsabschnitt (106) die Kommunikationshistorie für das Kommunikationsnetz aufzeichnet und
der Fakturierungsinformation-Erzeugungsabschnitt (110) Fakturierungsinformationen für das Kommunikationsnetz erzeugt.

7. Kommunikationsendgerät (100) nach einem der Ansprüche 1 bis 6, das ferner umfasst:
Mittel zum Erzeugen einer zu übertragenden Fakturierungsregel, um Fakturierungsregelinformationen zu erzeugen, die auf einen Dienst übertragen werden sollen, der den durch die Fakturierungsregel-Erfassungsmittel (1011) erfassten Fakturierungsregelinformationen entspricht; und
Metadaten-Übertragungsmittel, um zu übertragende Fakturierungsregelinformationen, die durch die Mittel zum Erzeugen von zu übertragenden Fakturierungsregeln erzeugt werden, und Dienstbeschreibungsinformationen, die Informationen über den Dienst beschreiben, zu übertragen.

8. Programm, um einem Computer zu ermöglichen, Folgendes auszuführen:
eine Fakturierungsregel-Erfassungsprozedur, um Fakturierungsregelinformationen bei der Bereitstellung eines Dienstes zu erfassen;
eine Kommunikationshistorie-Aufzeichnungsprozedur, um die Kommunikationshistorie des Empfangs über ein Kommunikationsnetz von Dienstinformationen, die erforderlich sind, um den Dienst bereitzustellen, aufzuzeichnen;
eine Fakturierungsinformation-Erzeugungsprozedur, um Informationen über die Fakturierung der Bereitstellung des Dienstes anhand der durch die Fakturierungsregel-Erfassungsprozedur erfassten Fakturierungsregelinformationen und der durch die Kommunikationshistorie-Aufzeichnungsprozedur aufgezeichneten Kommunikationshistorie zu erzeugen,
wobei die Fakturierungsregelinformationen erste Fakturierungsregelinformationen, die erforderlich sind, um die Dienstinformationen auszugeben, und/oder zweite Fakturierungsregelinformationen, die für die Dienstinformationen individuell festgelegt sind, enthalten;
wobei das Programm **dadurch gekennzeichnet ist, dass** es einem Computer ermöglicht, ferner auszuführen:
eine Prozedur zum Darstellen vorhergesagter Fakturierungsinformationen, um Fakturierungsinformationen, die der Nutzung des Dienstes zugeordnet sind, darzustellen, wobei die Informationen anhand der durch die Fakturierungsregel-Erfassungsprozedur erfassten Fakturierungsregelinformationen vorhergesagt werden, bevor der Dienst genutzt wird; und
eine Zustimmungsprozedur, um eine Dienstanforderungsnachricht für die Anforderung des Dienstes nur dann zu senden, wenn ein Signal erfasst wird, das der Bezahlung der durch die Prozedur zum Darstellen vorhergesagter Fakturierungsinformationen dargestellten Fakturierungsinformationen zustimmt.

## Revendications

1. Terminal de communication (100) qui reçoit une prestation de service via un réseau de communication, comprenant
des moyens d'acquisition de règle de facturation (1011) pour acquérir des informations de règle de facturation sur la prestation dudit service à partir d'au moins un appareil externe,
dans lequel lesdites informations de règle de facturation contiennent au moins l'une ou l'autre des premières informations de règle de facturation requises pour délivrer des informations de service et des secondes informations de règle de facturation individuellement fixées pour ladite information de service;
des moyens d'enregistrement de l'historique des communications (106) pour l'enregistrement de l'historique des communications en réception, par le réseau de communication, des informations de service requises pour fournir ledit service;
des moyens de génération d'informations de facturation (110) pour générer des informations sur la facturation de la prestation dudit service sur la base des informations de règle de facturation obtenues à partir desdits moyens d'acquisition de règle de facturation (1011) et de l'historique des communications enregistré par lesdits moyens d'enregistrement de l'historique des communications (106);
le terminal de communication est **caractérisé en ce qu'**il comprend en outre:
des moyens de présentation d'informations de facturation prévue (1051) pour présenter des informations de facturation associées à l'utilisation dudit service dont les informations sont prévues avant que ledit service ne soit utilisé, sur la base des informations de règle de facturation obtenues à partir desdits moyens d'acquisition de règle de facturation (1011); et
des moyens d'acquiescement (1052) pour transmettre un message de requête de service pour requérir ledit service seulement si un signal est détecté qui consent au paiement des informations de facturation présentées par lesdits moyens de présentation d'informations de facturation prévue (1051).

2. Terminal de communication selon la revendication 1, **caractérisé en ce qu'**au moins l'une ou l'autre desdites premières informations de règle de facturation et desdites secondes informations de règle de facturation sont déterminées conformément aux attributs d'un utilisateur possédant le terminal de communication (100).

3. Terminal de communication (100) selon l'une quelconque des revendications 1 à 2, comprenant en outre au moins:
des moyens de validation d'une signature numérique (104) pour valider une signature numérique appliquée à des données contenant lesdites informations de règle de facturation; ou
des moyens d'application d'une signature numérique pour appliquer une signature numérique à des informations de facturation générées par lesdits moyens de génération d'informations de facturation (110).

4. Terminal de communication (100) selon l'une quelconque des revendications 1 à 3, comprenant en outre:
des moyens de stockage d'informations de prépaiement pour stocker des informations de prépaiement représentatives d'une somme d'argent prépayée afin d'utiliser ledit service; et
des moyens de traitement de facturation prépayée pour payer ladite somme d'argent en soustrayant la somme d'argent devant être facturée dont la somme est représentée par des informations de facturation générées par lesdits moyens de génération d'informations de facturation, de la somme d'argent représentée par les informations de prépaiement stockées dans lesdits moyens de stockage d'informations de prépaiement.

5. Terminal de communication (100) selon l'une quelconque des revendications 1 à 4, comprenant en outre des moyens de présentation d'informations de facturation (1101) pour présenter des informations de facturation associées à l'utilisation dudit service et calculées soit pendant, soit après l'utilisation dudit service.

6. Terminal de communication (100) selon l'une quelconque des revendications 2 à 5, **caractérisé en ce que** ladite première règle de facturation comporte une règle de facturation pour le réseau de communication,
ladite section d'enregistrement de l'historique des communications (106) enregistre l'historique des communications pour le réseau de communication, et
ladite section de génération d'informations de facturation (110) génère des informations de facturation pour le réseau de communication.

7. Terminal de communication (100) selon l'une quelconque des revendications 1 à 6, comprenant en outre:
des moyens de génération de règle de facturation à transférer pour générer des informations de règle de facturation devant être transférées sur un service correspondant aux informations de règle de facturation acquises depuis les moyens d'acquisition de règle de facturation (1011) ; et
des moyens de transfert de métadonnées pour le transfert d'informations de règle de facturation à transférer générées par lesdits moyens de génération de règle de facturation à transférer et des informations de description de service décrivant des informations dudit service.

8. Programme permettant à un ordinateur d'exécuter:
une procédure d'acquisition de règle de facturation pour acquérir des informations de règle de la facturation sur la prestation d'un service ;
une procédure d'enregistrement de l'historique des communications pour enregistrer l'historique des communications en réception, via le réseau de communication, des informations de service requises pour fournir ledit service ;
une procédure de génération d'informations de facturation pour générer des informations sur la facturation de la prestation dudit service sur la base des informations de règle de facturation obtenues à partir de ladite procédure d'acquisition de règle de facturation et de l'historique des communications enregistré par ladite procédure d'enregistrement de l'historique des communications;
dans lequel les informations de règle de facturation contient au moins l'une ou l'autre des premières informations de règle de facturation requise pour délivrer lesdites informations de service et des secondes informations de règle de facturation individuellement fixées pour lesdites informations de service;
le programme est **caractérisé en ce qu'**il permet en outre à l'ordinateur d'exécuter:
une procédure de présentation des informations de facturation prévues pour présenter des informations de facturation associées à l'utilisation dudit service dont les informations sont prévues avant que ledit service soit utilisé, sur la base des informations de règle de facturation obtenues à partir de ladite procédure d'acquisition de règle de facturation; et
une procédure d'acquiescement pour transmettre un message de requête de service pour requérir ledit service seulement si un signal est détecté qui consent au paiement des informations de facturation présentées par ladite procédure de présentation d'informations de facturation prévue.
